# EUROPEAN PATENT SPECIFICATION

(11) **EP 3 503 484 B1**
(45) Date of publication and mention of the grant of the patent: **10.11.2021**
(21) Application number: 17848122.2
(22) Date of filing: 05.09.2017
(51) Int. Cl.: H04L 12/751, H04L 12/721, H04L 12/741, H04L 12/935

(54) **MESSAGE TRANSMISSION METHODS AND DEVICES**
NACHRICHTENÜBERTRAGUNGSVERFAHREN UND VORRICHTUNGEN
PROCÉDÉS ET DISPOSITIFS DE TRANSMISSION DE MESSAGES

(30) Priority: 08.09.2016 CN 201610812506
(43) Date of publication of application: 26.06.2019
(73) Proprietor: Huawei Technologies Co., Ltd., Longgang District Shenzhen, Guangdong 518129 (CN)
(72) Inventor: HU, Yinliang, Shenzhen Guangdong 518129 (CN)
(74) Representative: Maiwald Patent- und Rechtsanwaltsgesellschaft mbH
(86) International application number: PCT/CN2017/100555
(87) International publication number: WO 2018/045949

(56) References cited:
- WO-A1-2011/032487
- CN-A- 1 985 472
- CN-A- 105 227 453
- CN-A- 105 227 453
- CN-A- 105 282 058
- US-A1- 2006 039 369
- US-A1- 2013 272 310

## Description

### TECHNICAL FIELD

The present invention relates to the field of communications technologies, and especially, to packet transmission methods and devices in a network system.

### BACKGROUND

A computer network system is a system in which a plurality of terminals with different geographic locations and independent functions are interconnected by using communications devices and lines, and resource sharing and information transmission in a network are implemented by using network software with full functions. Communication between terminals is implemented through interconnection between the terminals, so as to implement functions such as information, software and device resource sharing, and collaboration between the terminals. With continuous development of the information society, good data management and high sharing are indispensable for an overall operation of an enterprise. Therefore, an enterprise network system becomes increasingly important, and directly affects rapidity of high resource sharing and information exchange between the terminals in the enterprise.

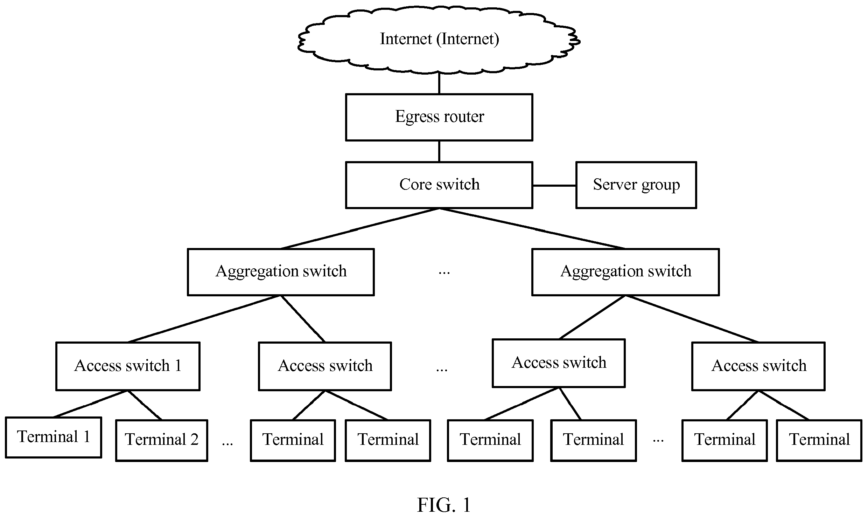

FIG. 1 shows an existing typical enterprise network system architecture. Because switches are deployed in a distributed manner, a quantity of switches is usually increased to allow access of more terminals. However, management and maintenance of the network system become complex because of an increase in the quantity of switches. As shown in FIG. 1, an access switch 1 is connected to a terminal 1 and a terminal 2, and when the terminals connected to the access switch 1 change, the access switch 1 needs to be re-configured.

US 2013/0272310 A1 describes a mapping server. The mapping server comprises a path information obtaining unit that obtains path information on external networks through a forwarding device connecting to an external network; and a mapping information generating unit that generates mapping information that relates the path information and the forwarding device.

WO 2011/032487 A1 describes a method for updating the local mapping table of an access router and the access router thereof. The method includes a source access router sends a data packet to a destination access router, wherein, the source and destination addresses are identified by route identifiers, and the content encapsulated in the sent data packet includes the user index corresponding to the user identifier of the destination terminal in the local mapping table of the source access router, the source access router receives the data packet sent by the destination access router, wherein, the source and destination addresses are identified by route identifiers, and the content encapsulated in the received data packet includes said user index, the source access router resolves the received data packet, lo-cates and updates the mapping relationship between the user identifier and the route identifier of the destination terminal according to the user index directly.

CN 105 227 453 A describes a message forwarding method and device. The message forwarding method comprises the steps of receiving a to-be-forwarded message which is received by a receiving port of an Ethernet switch and comprises the port number of the receiving port; determining the port number of an output port which corresponds to the port number of the receiving port based on a preset corresponding relationship between the port number of each receiving port and the port number of each output port; and sending the to-be-forwarded message to the output port based on the port number of the output port.

In conclusion, management and maintenance of the network system become complex in the prior art.

### SUMMARY

The invention is defined by the appended claims. Embodiments and examples not covered by the claims are meant to illustrate, and facilitate the understanding of, the claimed invention.

The present invention provides a packet transmission method by a distributor, a distributor device, a packet transmission method by a switch and a switch device, so as to resolve a prior-art problem that management and maintenance of a network system become complex.

According to a first aspect, a packet transmission method is provided, including:
receiving, by a distributor, a packet sent by a source terminal; determining path information of the packet from the source terminal to the distributor, and searching a pre-learned first mapping relationship between path information and a switch identifier for a first switch identifier based on the determined path information, where the first switch identifier is a switch identifier corresponding to the determined path information; sending the packet to a first switch corresponding to the first switch identifier; after receiving a packet fed back by the first switch, determining that the packet fed back by the first switch includes the first switch identifier and a destination terminal identifier; then searching, based on the first switch identifier and the destination terminal identifier, a pre-learned second mapping relationship between path information and an identifier pair including a switch identifier and a terminal identifier for path information corresponding to an identifier pair including the first switch identifier and the destination terminal identifier; and finally forwarding, to a destination terminal based on the found path information, the packet sent by the source terminal.

In this embodiment of the present invention, the distributor can learn the first mapping relationship and the second mapping relationship in advance. Therefore, when receiving the packet sent by the source terminal to the destination terminal, the distributor can obtain the terminal identifier of the destination terminal and the first switch identifier, and find path information from the distributor to the destination terminal by using the second mapping relationship. According to this packet transmission method, because the distributor can centrally receive and transmit packets, a port quantity of a switch is reduced while packet transmission complexity is reduced, and complexity of managing and maintaining a network system is reduced, thereby greatly reducing operation and maintenance costs.

Based on the first aspect, optionally, the distributor determines that the fed-back packet includes a second switch identifier but does not include the destination terminal identifier; sends the fed-back packet to a second switch corresponding to the second switch identifier; then receives a packet fed back by the second switch, where the packet fed back by the second switch includes the second switch identifier and the destination terminal identifier; and searches, based on the second switch identifier and the destination terminal identifier, the pre-learned second mapping relationship between path information and an identifier pair including a switch identifier and a terminal identifier for path information corresponding to an identifier pair including the second switch identifier and the destination terminal identifier, and then forwards, to the destination terminal, the packet sent by the source terminal.

When an identifier pair corresponding to the destination terminal identifier is stored in the second switch, the distributor can send the packet to the second switch, receive the packet that is fed back by the second switch and that includes the second switch identifier and the destination terminal identifier, and then find the path information from the distributor to the destination terminal, so that the network system can exchange a packet when the source terminal and the destination terminal are separately managed by different switches.

Based on the first aspect, optionally, if the distributor does not find, based on the first mapping relationship, the switch identifier corresponding to the path information of the packet from the source terminal to the distributor, the distributor sends a terminal authentication request to an authentication server, where the terminal authentication request includes attribute information of the source terminal, and the authentication server pre-stores a correspondence between attribute information of a terminal and a switch identifier; and receives the first switch identifier that is found by the authentication server and that is corresponding to the attribute information of the source terminal, and then sends the packet to the first switch.

When the first switch identifier is not found in the first mapping relationship pre-learned by the distributor, the first switch identifier can be found by using the foregoing steps, to help the distributor pre-learn the first mapping relationship.

Based on the first aspect, optionally, the distributor allocates a terminal identifier to the terminal; and then stores a second mapping relationship between the path information of the packet from the source terminal to the distributor and an identifier pair including the first switch identifier and the allocated terminal identifier.

Based on the first aspect, optionally, when the source terminal sends the packet to the destination terminal for a first time, because the first switch does not store a mapping relationship between first address information of the source terminal and an identifier pair including a source terminal identifier and the first switch identifier, after the distributor receives the first switch identifier found from the authentication server and the source terminal identifier allocated by the distributor to the source terminal, the distributor encapsulates the first switch identifier and the source terminal identifier into the packet, and sends, to the first switch, the packet into which the first switch identifier and the source terminal identifier are encapsulated, so that the first switch can pre-learn and generate the mapping relationship between the first address information and the identifier pair including the source terminal identifier and the first switch identifier. After receiving the packet into which the first switch identifier and the source terminal identifier are encapsulated, the first switch can directly obtain the first address information, the first switch identifier, and the source terminal identifier from the packet through parsing, and then obtain the mapping relationship between the first address information and the identifier pair including the first switch identifier and the source terminal identifier.

Based on the first aspect, optionally, a specific method used by the distributor to determine the path information of the packet from the source terminal to the distributor is as follows:
parsing, by the distributor, the packet, to obtain first path information encapsulated in the packet, where the first path information is a port number used, to connect to a downstream device, by each device that is between the source terminal and a downstream device connected to the distributor and that does not include the source terminal but includes the downstream device connected to the distributor; and then determining a port number used for connecting to the downstream device in the first path information, and determining the path information of the packet from the source terminal to the distributor based on the first path information and the determined port number. In the foregoing manner, the specific method used by the distributor to determine the path information of the packet from the source terminal to the distributor is simplified.

According to a second aspect, a packet transmission method is provided, including:
parsing, by a first switch, a packet from a distributor, to determine first address information and second address information of a destination terminal that needs to receive the packet; then after determining that the second address information of the destination terminal is in a subnet segment of second address information managed by the first switch, searching, based on the first address information of the destination terminal, a pre-stored mapping relationship between first address information and an identifier pair including a first switch identifier and a terminal identifier for an identifier pair in which a destination terminal identifier is located; and finally encapsulating the found identifier pair into the packet, and sending the packet to the distributor.

Because the first switch parses and determines only the first address information and the second address information in the packet, a packet processing procedure of a switch is simplified, so that a packet transmission rate is improved.

Based on the second aspect, optionally, when the packet is an IP (Internet Protocol, Internet Protocol) packet, the first address information is a MAC (Media Access Control, Media Access Control) address, and the second address information is an IP address.

Based on the second aspect, optionally, if the first switch finds, when determining that the second address information of the destination terminal is not in the subnet segment of the second address information managed by the first switch, an identifier pair in which a destination switch is located, the first switch determines, based on the second address information of the destination terminal, a subnet segment in which the second address information is located; searches a pre-stored mapping relationship between a subnet segment and a switch identifier for a second switch identifier based on the determined subnet segment, where the second switch identifier is corresponding to the determined subnet segment; and then encapsulates the second switch identifier into the packet, and sends the packet to the distributor.

Based on the second aspect, if the first switch does not find, when determining that the second address information of the destination terminal is in the subnet segment of the second address information managed by the first switch, the identifier pair in which the destination terminal identifier is located, the first switch optionally broadcasts a request for obtaining the destination terminal identifier, where the request for obtaining the destination terminal identifier includes the second address information of the destination terminal; then receives a packet including the destination terminal identifier, and stores a mapping relationship between the first address information of the destination terminal and an identifier pair including the first switch identifier and the destination terminal identifier; and finally encapsulates the found identifier pair into the packet.

Based on the second aspect, optionally, a method used by the first switch to learn and specifically store a mapping relationship between first address information of a source terminal and an identifier pair including a source terminal identifier and the first switch identifier is as follows:
parsing, by the first switch, the packet from the distributor, to determine the first address information of the source terminal that sends the packet; if the first switch determines that the pre-stored mapping relationship between first address information and an identifier pair including a first switch identifier and a terminal identifier does not include the mapping relationship of the first address information of the source terminal that sends the packet, obtaining the source terminal identifier and the first switch identifier that are included in the packet; and storing the mapping relationship between the first address information of the source terminal that sends the packet and the identifier pair including the source terminal identifier and the first switch identifier.

According to a third aspect, a packet transmission distributor is provided, including a transceiver unit and a processing unit. The transceiver unit is configured to receive a packet sent by a source terminal. The processing unit is configured to: determine path information of the packet from the source terminal to the distributor, and search a pre-learned first mapping relationship between path information and a switch identifier for a first switch identifier based on the determined path information, where the first switch identifier is a switch identifier corresponding to the determined path information. The transceiver unit is further configured to: send the packet to a first switch corresponding to the first switch identifier; and receive a packet fed back by the first switch. The processing unit is further configured to: determine that the packet fed back by the first switch includes the first switch identifier and a destination terminal identifier; and search, based on the first switch identifier and the destination terminal identifier, a pre-learned second mapping relationship between path information and an identifier pair including a switch identifier and a terminal identifier for path information corresponding to an identifier pair including the first switch identifier and the destination terminal identifier. The transceiver unit is further configured to forward, to a destination terminal based on the found path information, the packet sent by the source terminal.

Based on the third aspect, optionally, the processing unit is further configured to: before the transceiver unit forwards, to the destination terminal, the packet sent by the source terminal, determine that the fed-back packet includes a second switch identifier but does not include the destination terminal identifier. The transceiver unit is further configured to: send the fed-back packet to a second switch corresponding to the second switch identifier, and receive a packet fed back by the second switch, where the packet fed back by the second switch includes the second switch identifier and the destination terminal identifier. The processing unit is further configured to search, based on the second switch identifier and the destination terminal identifier, the pre-learned second mapping relationship between path information and an identifier pair including a switch identifier and a terminal identifier for path information corresponding to an identifier pair including the second switch identifier and the destination terminal identifier.

Based on the third aspect, optionally, the transceiver unit is further configured to: before sending the packet to the first switch, if the processing unit does not find, based on the first mapping relationship, the switch identifier corresponding to the path information of the packet from the source terminal to the distributor, send a terminal authentication request to an authentication server, where the terminal authentication request includes attribute information of the source terminal, and the authentication server pre-stores a correspondence between attribute information of a terminal and a switch identifier; and receive the first switch identifier that is found by the authentication server and that is corresponding to the attribute information of the source terminal.

Based on the third aspect, optionally, the processing unit is further configured to: allocate a terminal identifier to the terminal; and store a second mapping relationship between the path information of the packet from the source terminal to the distributor and an identifier pair including the first switch identifier and the allocated terminal identifier.

Based on the third aspect, optionally, the processing unit is further configured to: before the transceiver unit sends the packet to the first switch, search the second mapping relationship for a source terminal identifier and the first switch identifier based on the path information of the packet from the source terminal to the distributor, where an identifier pair including the source terminal identifier and the first switch identifier is corresponding to the path information of the packet from the source terminal to the distributor; and encapsulate the source terminal identifier and the first switch identifier into the packet.

Based on the third aspect, optionally, when determining the path information of the packet from the source terminal to the distributor, the processing unit is specifically configured to: parse the packet, to obtain first path information encapsulated in the packet, where the first path information is a port number used, to connect to a downstream device, by each device that is between the source terminal and a downstream device connected to the distributor and that does not include the source terminal but includes the downstream device connected to the distributor; and determine a port number used by the distributor to connect to the downstream device in the first path information, and determine the path information of the packet from the source terminal to the distributor based on the first path information and the determined port number.

According to a fourth aspect, a packet transmission switch is provided, including a processing unit and a transceiver unit. The processing unit is configured to: parse a packet from a distributor, to determine first address information and second address information of a destination terminal that needs to receive the packet; after it is determined that the second address information of the destination terminal is in a subnet segment of second address information managed by a first switch, search, based on the first address information of the destination terminal, a pre-stored mapping relationship between first address information and an identifier pair including a first switch identifier and a terminal identifier for an identifier pair in which a destination terminal identifier is located; and encapsulate the found identifier pair into the packet. The transceiver unit is configured to send the packet to the distributor.

Based on the fourth aspect, optionally, the processing unit is further configured to: if it is determined that the second address information of the destination terminal is not in the subnet segment of the second address information managed by the first switch, determine, based on the second address information of the destination terminal, a subnet segment in which the second address information is located; search, based on the determined subnet segment, a pre-stored mapping relationship between a subnet segment and a switch identifier for a switch identifier corresponding to the determined subnet segment; and encapsulate the switch identifier corresponding to the determined subnet segment into the packet. The transceiver unit is further configured to send the packet to the distributor.

Based on the fourth aspect, optionally, the transceiver unit is further configured to: before the processing unit encapsulates the found identifier pair into the packet, if the processing unit does not find the identifier pair in which the destination terminal identifier is located, broadcast a request for obtaining the destination terminal identifier, where the request for obtaining the destination terminal identifier includes the second address information of the destination terminal; and receive a packet including the destination terminal identifier. The processing unit is further configured to store a mapping relationship between the first address information of the destination terminal and an identifier pair including the switch identifier and the destination terminal identifier.

Based on the fourth aspect, optionally, the processing unit is further configured to: parse the packet from the distributor, to determine first address information of a source terminal that sends the packet; if it is determined that the pre-stored mapping relationship between first address information and an identifier pair including a switch identifier and a terminal identifier does not include a mapping relationship of the first address information of the source terminal that sends the packet, obtain a source terminal identifier and the switch identifier that are included in the packet; and store a mapping relationship between the first address information of the source terminal that sends the packet and an identifier pair including the source terminal identifier and the switch identifier.

### BRIEF DESCRIPTION OF DRAWINGS

FIG. 1 is a schematic diagram of an enterprise network system architecture in the prior art;
FIG. 2 is a schematic diagram of an enterprise network system architecture according to an embodiment of the present invention;
FIG. 3 is a schematic flowchart of a packet transmission method according to an embodiment of the present invention;
FIG. 4A and FIG. 4B are a schematic flowchart of a packet transmission method according to an embodiment of the present invention;
FIG. 5a to FIG. 5c are separately schematic diagrams of enterprise network system architectures according to an embodiment of the present invention;
FIG. 6A, FIG. 6B, FIG. 6C, FIG. 6D, and FIG. 6E are a schematic flowchart of a packet transmission method according to an embodiment of the present invention;
FIG 7A, FIG 7B, FIG 7C, FIG 7D, FIG. 7E, and FIG. 7F are a schematic flowchart of a packet transmission method according to an embodiment of the present invention;
FIG. 8 is a schematic structural diagram of a distributor according to an embodiment of the present invention;
FIG. 9 is a schematic structural diagram of hardware of a distributor according to an embodiment of the present invention;
FIG. 10 is a schematic structural diagram of a switch according to an embodiment of the present invention;
FIG. 11 is a schematic structural diagram of hardware of a switch according to an embodiment of the present invention;
FIG. 12 is a schematic structural diagram of a relay device; and
FIG. 13 is a schematic structural diagram of hardware of a relay device.

### DESCRIPTION OF EMBODIMENTS

To make the objectives, technical solutions, and advantages of embodiments of the present invention clearer, the following further describes the embodiments of the present invention in detail with reference to the accompanying drawings.

In the prior art, an enterprise network system is shown in FIG. 1. Switches are deployed in a distributed manner, and terminals access the enterprise network system by using the switches. Generally, an enterprise includes a plurality of different departments, such as the research and development department and the finance department. Terminals in different departments access the enterprise network system by using different ports of a same switch or different ports of different switches. Different network policies need to be configured for different ports. When a location of a terminal changes to connect to a port of another switch, the port further needs to be correspondingly re-configured. Therefore, in the enterprise network system shown in FIG. 1, there is a relatively large quantity of switches to increase a quantity of terminals that access the enterprise network system, and consequently, it is relatively complex to maintain and manage the switches. Further, complexity of an operation of accessing a network by the terminal is increased because the port of the switch and the terminal are bound.

Some terms in the embodiments of the present invention are correspondingly described below.

Switch identifier: used to uniquely identify a switch. Specifically, the identifier may be a number or another identifier. Specifically, terminals with a same configuration policy are configured in a same switch. Generally, terminals belonging to a same department in an enterprise access an enterprise network system by using a same configuration policy. Therefore, terminals in a same department may be managed by using one switch. Especially, when the terminals belonging to the same department access the enterprise network system by using different configuration policies, the terminals with the same configuration policy are configured in the same switch; or when terminals in a plurality of departments have a same configuration policy, the terminals belonging to the plurality of departments are configured in a same switch.

Terminal identifier: used to identify a terminal. The terminal identifier may be a number or another identifier. In the embodiments of the present invention, terminals managed by a same switch have different terminal identifiers, and terminals managed by different switches may have a same terminal identifier or different terminal identifiers. For example, a switch 1 manages two terminals: a terminal 1 and a terminal 2, and terminal identifiers of the terminal 1 and the terminal 2 are respectively 1 and 2. A switch 2 manages three terminals: a terminal 1, a terminal 2, and a terminal 3, and terminal identifiers of the terminal 1, the terminal 2, and the terminal 3 may be respectively 1, 2, and 3, or terminal identifiers of the terminal 1, the terminal 2, and the terminal 3 may be respectively 3, 4, and 5.

Attribute information of a terminal: is unique information that can be used to indicate the terminal, such as a MAC address or a certificate of the terminal.

Path information: is path information from a terminal to a distributor.

It should be understood that, in the embodiments of the present invention, a first mapping relationship and a second mapping relationship may be different mapping relationships, or a first mapping relationship may be a second mapping relationship.

It should be understood that, in the embodiments of the present invention, a packet header of a packet includes first address information and second address information of a source terminal and first address information and second address information of a destination terminal. When the packet is a packet that supports the IP protocol, the first address information is a MAC address, and the second address information is an IP address; or the first address information and the second address information are other address information encapsulated in the packet header in advance.

It should be understood that, in the embodiments of the present invention, a correspondence that is between attribute information of a terminal and a switch identifier and that is pre-stored on an authentication server needs to be manually pre-configured.

In addition, it should be understood that, in the embodiments of the present invention, a distributor may be further configured to connect to an egress router, to connect to the Internet; or a distributor may connect to various servers such as an FTP server and a mail server, to share resources.

Corresponding descriptions are provided below by using an example in which the first address information is a MAC address, and the second address information is an IP address. A step of transmitting the packet when the first address information and the second address information in the packet are the other address information is similar to a step of transmitting the packet when the first address information is a MAC address, and the second address information is an IP address. Details are not described herein.

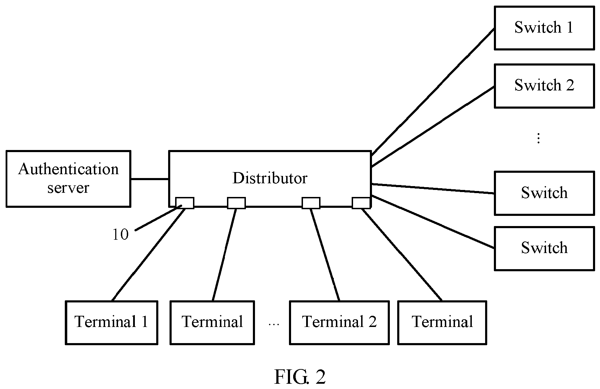

To resolve a problem that management and maintenance of a network system are relatively complex because switches are deployed in a distributed manner, FIG. 2 shows an enterprise network system according to an embodiment of the present invention. The enterprise network system includes a distributor and at least one switch. The distributor is separately connected to the switch, and the distributor is connected to an authentication server. When a user wants to put a terminal in the enterprise network system, the user only needs to connect the terminal and the distributor.

The enterprise network system shown in FIG. 2 is applicable to access of a relatively small quantity of terminals.

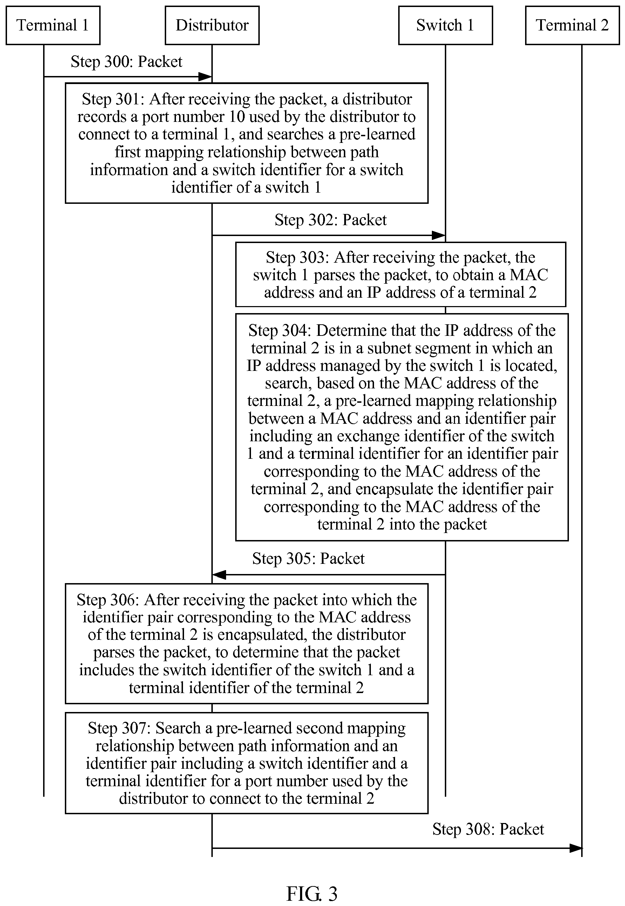

As shown in FIG. 3, FIG. 2 is used as an example. It is assumed that a terminal 1 and a terminal 2 are managed by a switch 1. When the terminal 1 needs to send a packet to the terminal 2, a packet transmission method includes the following steps.

Step 300: The terminal 1 sends a packet to a distributor.

Step 301: After receiving the packet, the distributor records a port number 10 used by the distributor to connect to the terminal 1, and searches a pre-learned first mapping relationship between path information and a switch identifier for a switch identifier of the switch 1.

It should be noted that the path information is path information from the terminal to the distributor. In the enterprise network system shown in FIG. 2, the path information is a port number X used by the distributor to connect to the terminal. Specifically, the first mapping relationship is {X: switch identifier}.

Step 302: The distributor sends the packet to the switch 1 based on the switch identifier of the switch 1.

Step 303: After receiving the packet, the switch 1 parses the packet, to obtain a MAC address and an IP address of the terminal 2.

Step 304: The switch 1 determines that the IP address of the terminal 2 is in a subnet segment in which an IP address managed by the switch 1 is located, searches, based on the MAC address of the terminal 2, a pre-learned mapping relationship between a MAC address and an identifier pair including an exchange identifier of the switch 1 and a terminal identifier for an identifier pair corresponding to the MAC address of the terminal 2, and encapsulates the identifier pair corresponding to the MAC address of the terminal 2 into the packet.

Step 305: The switch 1 sends, to the distributor, the packet into which the identifier pair corresponding to the MAC address of the terminal 2 is encapsulated.

Step 306: After receiving the packet into which the identifier pair corresponding to the MAC address of the terminal 2 is encapsulated, the distributor parses the packet, to determine that the packet includes the identifier pair corresponding to the MAC address of the terminal 2, that is, the switch identifier of the switch 1 and a terminal identifier of the terminal 2.

In addition, after determining that the IP address of the terminal 2 is in the subnet segment in which the IP address managed by the switch 1 is located, the switch 1 sets an inter-group exchange identifier to 0, to notify the distributor that the terminal 1 and the terminal 2 are managed by a same switch, and the switch 1 encapsulates the inter-group exchange identifier 0 into a packet header of the packet, and sends the inter-group exchange identifier 0 to the distributor. After parsing the packet, the distributor obtains the inter-group exchange identifier 0, determines that the current packet transmission is intra-group exchange, and then determines that the packet includes the identifier pair corresponding to the MAC address of the terminal 2.

Step 307: The distributor searches a pre-learned second mapping relationship between path information and an identifier pair including a switch identifier and a terminal identifier for a port number used by the distributor to connect to the terminal 2.

Step 308: The distributor sends the packet to the terminal 2 by using the port number used for connecting to the terminal 2.

When the terminal 1 sends the packet for a first time, in step 301, a mapping relationship between the port number 10 that is used for accessing the terminal 1 and that is recorded by the distributor and a switch identifier of a switch that manages the terminal 1 is not stored in the pre-learned first mapping relationship in the distributor. In this case, a specific process in which the distributor specifically learns and stores the mapping relationship between the recorded port number 10 used for connecting to the terminal 1 and the switch identifier of the switch that manages the terminal 1 is as follows:
The distributor sends a terminal authentication request to an authentication server, and the terminal authentication request includes attribute information of the terminal 1. After receiving the terminal authentication request, the authentication server searches, based on the attribute information of the terminal 1, a pre-stored correspondence between attribute information of a terminal and a switch identifier for a switch identifier corresponding to the attribute information of the terminal 1, where the found switch identifier is the switch identifier of the switch 1; and the authentication server sends the found switch identifier to the distributor. After receiving the switch identifier, the distributor allocates a terminal identifier to the terminal 1, where the allocated terminal identifier cannot overlap the terminal identifier that is in the second mapping relationship and that forms the identifier pair with the received switch identifier, and stores a mapping relationship between the recorded port number 10 used for connecting to the terminal 1 and an identifier pair including the received switch identifier and the allocated terminal identifier.

For example, if the switch identifier and the terminal identifier are numbers, if the received switch identifier is 5, the terminal identifier that is in the second mapping relationship and that forms the identifier pair with the switch identifier 5 includes 1, 2, and 3. In this case, the terminal identifier allocated to the terminal 1 cannot be 1, 2, or 3, and the terminal identifier allocated to the terminal 1 can be 4 or a number other than 1, 2, and 3.

Specifically, when the terminal 1 sends the packet by using an enterprise network system for a first time, the switch 1 does not store a mapping relationship between a MAC address of the terminal 1 and an identifier pair including an exchange identifier of the switch 1 and a terminal identifier of the terminal 1. Therefore, before the distributor sends the packet to the switch 1, a specific process in which the switch 1 learns and stores the mapping relationship between the MAC address of the terminal 1 and the identifier pair including the exchange identifier of the switch 1 and the terminal identifier of the terminal 1 is as follows:
The distributor encapsulates the switch identifier of the switch 1 and the terminal identifier of the terminal 1 into the packet. To avoid occupying space used for carrying data in the packet, the distributor may encapsulate the exchange identifier of the switch 1 and the terminal identifier of the terminal 1 into the packet header of the packet, and then send the exchange identifier of the switch 1 and the terminal identifier of the terminal 1 to the switch 1. When parsing the packet, the switch 1 can not only obtain the MAC address and the IP address of the terminal 2, but can also obtain the MAC address of the terminal 1, the exchange identifier of the switch 1, and the terminal identifier of the terminal 1, and then the switch 1 stores the correspondence between the MAC address of the terminal 1 and the identifier pair including the exchange identifier of the switch 1 and the terminal identifier of the switch 1.

After obtaining the exchange identifier of the switch 1 and the terminal identifier of the terminal 1 through parsing, the switch 1 deletes the exchange identifier of the switch 1 and the terminal identifier of the terminal 1 that are encapsulated in the packet, so as to avoid encapsulating excessively useless information into the packet.

Optionally, after the switch 1 stores the mapping relationship between the MAC address of the terminal 1 and the identifier pair including the switch identifier of the switch 1 and the terminal identifier, the distributor may no longer encapsulate the switch 1 identifier and the terminal identifier of the terminal 1 into the packet, and the distributor directly sends the packet to the switch 1 when determining that the packet needs to be sent to the switch 1.

In step 304, when the terminal 2 has not sent the packet in the enterprise network system, and the switch 1 does not store the mapping relationship between the MAC address of the terminal 2 and the identifier pair including the exchange identifier of the switch 1 and the terminal identifier, the switch 1 broadcasts, when the switch 1 does not find the identifier pair corresponding to the MAC address of the terminal 2 in the pre-learned mapping relationship between the MAC address and the identifier pair including the exchange identifier of the switch 1 and the terminal identifier, a request for obtaining the terminal identifier of the terminal 2, and the request for obtaining the terminal identifier of the terminal 2 includes the IP address of the terminal 2. Specifically, the switch 1 delivers, by using the distributor, the request for obtaining the terminal identifier of the terminal 2 to each terminal connected to the distributor. After receiving the request for obtaining the terminal identifier of the terminal 2, each terminal determines whether an IP address of the terminal is an IP address in the request for obtaining the terminal identifier of the terminal 2. If the IP address of the terminal is not the IP address in the request, the terminal does not respond to the request. To be specific, a terminal other than the terminal 2 does not respond to the request, and the terminal 2 sends a response packet to the distributor in response to the request. Because the terminal 2 sends the packet to the distributor for a first time, a step performed by the distributor is the same as a step performed on the distributor by the terminal 1. Details are not described herein again. After obtaining the terminal identifier of the terminal 2 and the switch 1 identifier of the switch 1 that manages the terminal 2, the distributor encapsulates the terminal identifier of the terminal 2 and the switch 1 identifier of the switch 1 that manages the terminal 2 into the response packet, and sends, to the switch 1, the terminal identifier of the terminal 2 and the switch 1 identifier of the switch 1 that manages the terminal 2. A method in which the switch 1 specifically stores the mapping relationship between the MAC address of the terminal 2 and the identifier pair including the exchange identifier of the switch 1 and the terminal identifier is the same as a method in which the switch 1 stores the mapping relationship between the MAC address of the terminal 1 and the identifier pair including the exchange identifier of the switch 1 and the terminal identifier. Details are not described herein again.

In addition, when the attribute information in the correspondence that is between attribute information and a switch identifier and that is stored in the authentication server is a MAC address of the terminal, when the terminal 2 has not sent the packet in the enterprise network system, and the switch 1 does not store the mapping relationship between the MAC address of the terminal 2 and the identifier pair including the exchange identifier of the switch 1 and the terminal identifier, the switch 1 sends, when the switch 1 does not find the identifier pair corresponding to the MAC address of the terminal 2 in the pre-learned mapping relationship between the MAC address and the identifier pair including the exchange identifier of the switch 1 and the terminal identifier, a request for obtaining the terminal identifier of the terminal 2 to the distributor, and the request for obtaining the terminal identifier of the terminal 2 includes the MAC address of the terminal 2. After receiving the request for obtaining the terminal identifier of the terminal 2, the distributor encapsulates, into a terminal authentication request of the terminal 2, the MAC address of the terminal 2 included in the request for obtaining the terminal identifier of the terminal 2, and sends the MAC address of the terminal 2 to the authentication server. After receiving the terminal authentication request, the authentication server obtains, based on the MAC address of the terminal 2 included in the terminal authentication request, the identifier of the switch 1 that manages the terminal 2 from a pre-stored correspondence between the MAC address of the terminal 2 and the switch identifier, and then sends the identifier of the switch 1 to the distributor. A method in which the distributor allocates a terminal identifier to the terminal 2 after receiving the identifier of the switch 1 is similar to the foregoing method in which the distributor allocates the terminal identifier to the terminal 1. Details are not described herein again. Then the distributor sends the terminal identifier of the terminal 2 to the switch 1.

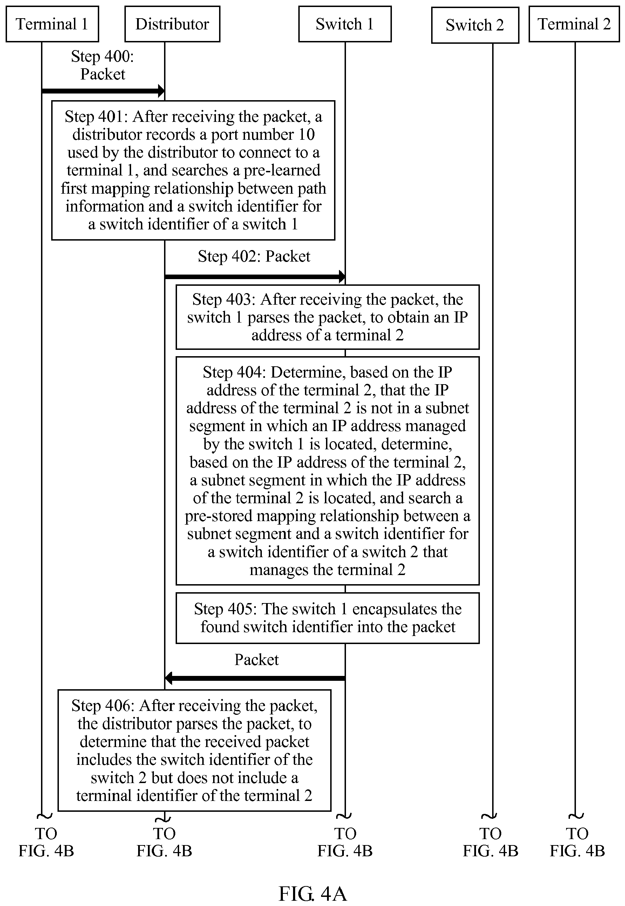

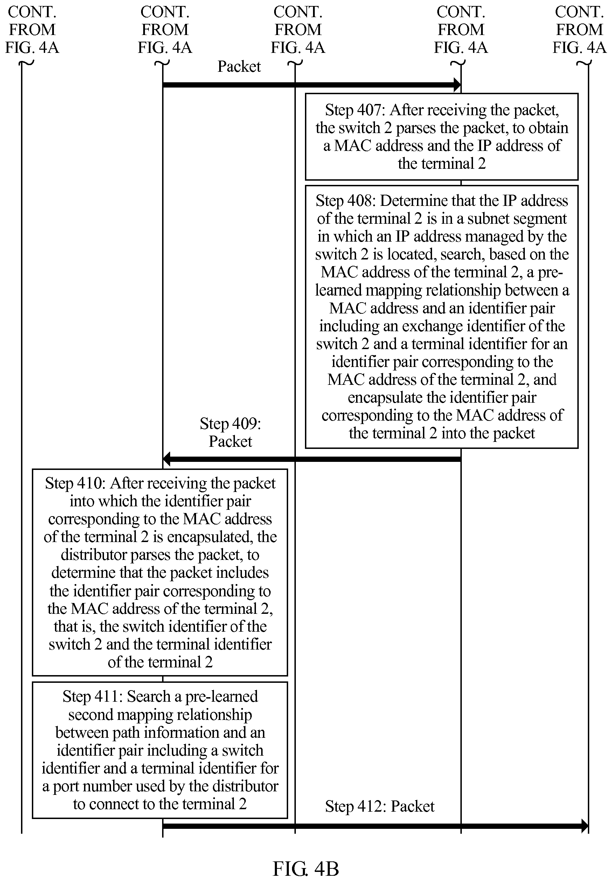

As shown in FIG. 4A and FIG. 4B, FIG. 2 is used as an example. It is assumed that a terminal 1 is managed by a switch 1, and a terminal 2 is managed by a switch 2. When the terminal 1 needs to send a packet to the terminal 2, a packet transmission method includes the following steps.

Step 400: The terminal 1 sends a packet to a distributor.

Step 401: After receiving the packet, the distributor records a port number 10 used by the distributor to connect to the terminal 1, and searches a pre-learned first mapping relationship between path information and a switch identifier for a switch identifier of the switch 1.

It should be noted that, in the enterprise network system shown in FIG. 2, the path information is a port number X used by the distributor to connect to a terminal. Specifically, the first mapping relationship is {X: switch identifier}.

Step 402: The distributor sends the packet to the switch 1 based on the switch identifier of the switch 1.

Step 403: After receiving the packet, the switch 1 parses the packet, to obtain an IP address of the terminal 2.

Step 404: The switch 1 determines, based on the IP address of the terminal 2, that the IP address of the terminal 2 is not in a subnet segment in which an IP address managed by the switch 1 is located, determines, based on the IP address of the terminal 2, a subnet segment in which the IP address of the terminal 2 is located, and searches a pre-stored mapping relationship between a subnet segment and a switch identifier for a switch identifier of the switch 2 that manages the terminal 2.

Step 405: The switch 1 encapsulates the found switch identifier into the packet, and sends, to the distributor, the packet into which the switch identifier is encapsulated.

Step 406: After receiving the packet, the distributor parses the packet, to determine that the received packet includes the switch identifier of the switch 2 but does not include a terminal identifier of the terminal 2, and forwards the received packet to the switch 2.

In addition, after determining that the IP address of the terminal 2 is not in the subnet segment in which the IP address managed by the switch 1 is located, the switch 1 sets an inter-group exchange identifier to 1, to notify the distributor that the terminal 1 and the terminal 2 are separately managed by different switches, and the switch 1 encapsulates the exchange identifier 1 into a packet header of the packet, and sends the exchange identifier 1 to the distributor. After parsing the packet, the distributor obtains the inter-group exchange identifier 1, determines that the current packet transmission is inter-group exchange, and then determines that the packet includes the switch identifier of the switch 2.

Because the switch 2 does not need to analyze the inter-group exchange identifier, the distributor may delete the inter-group exchange identifier 1 encapsulated in the packet header.

Step 407: After receiving the packet, the switch 2 parses the packet, to obtain a MAC address and the IP address of the terminal 2.

Step 408: The switch 2 determines that the IP address of the terminal 2 is in a subnet segment in which an IP address managed by the switch 2 is located, searches, based on the MAC address of the terminal 2, a pre-learned mapping relationship between a MAC address and an identifier pair including an exchange identifier of the switch 2 and a terminal identifier for an identifier pair corresponding to the MAC address of the terminal 2, and encapsulates the identifier pair corresponding to the MAC address of the terminal 2 into the packet.

Step 409: The switch 2 sends, to the distributor, the packet into which the identifier pair corresponding to the MAC address of the terminal 2 is encapsulated.

Step 410: After receiving the packet into which the identifier pair corresponding to the MAC address of the terminal 2 is encapsulated, the distributor parses the packet, to determine that the packet includes the identifier pair corresponding to the MAC address of the terminal 2, that is, the switch identifier of the switch 2 and the terminal identifier of the terminal 2.

Step 411: The distributor searches a pre-learned second mapping relationship between path information and an identifier pair including a switch identifier and a terminal identifier for a port number used by the distributor to connect to the terminal 2.

Step 412: The distributor sends the packet to the terminal 2 by using the port number used for connecting to the terminal 2.

When the terminal 1 sends the packet to the distributor for a first time, in step 401, a mapping relationship between the port number 10 that is used for accessing the terminal 1 and that is recorded by the distributor and a switch identifier of a switch that manages the terminal 1 is not stored in the pre-learned first mapping relationship in the distributor. In this case, a specific process in which the distributor specifically learns and stores the mapping relationship between the recorded port number 10 used for connecting to the terminal 1 and the switch identifier of the switch that manages the terminal 1 is the same as the specific process in which the distributor specifically learns and stores the mapping relationship between the recorded port number 10 used for connecting to the terminal 1 and the switch identifier of the switch that manages the terminal 1 in packet transmission shown in FIG. 3. Details are not described herein again.

Specifically, when the terminal 1 sends the packet by using an enterprise network system for a first time, the switch 1 does not store a mapping relationship between a MAC address of the terminal 1 and an identifier pair including an exchange identifier of the switch 1 and a terminal identifier of the terminal 1. Therefore, before the distributor sends the packet to the switch 1, a specific process in which the switch 1 learns and stores the mapping relationship between the MAC address of the terminal 1 and the identifier pair including the exchange identifier of the switch 1 and the terminal identifier of the terminal 1 is the same as the specific process in which the switch 1 learns and stores the mapping relationship between the MAC address of the terminal 1 and the identifier pair including the exchange identifier of the switch 1 and the terminal identifier of the terminal 1 in packet transmission shown in FIG. 3. Details are not described herein again.

In the enterprise network system in this embodiment of the present invention, terminals can centrally exchange packets by using the distributor, and one switch can manage a plurality of terminals belonging to a same subnet segment. Therefore, a quantity of switches in the enterprise network system is reduced, packet transmission complexity is reduced while management and operation and maintenance of the switch are facilitated, and packet transmission efficiency is improved.

To increase a quantity of terminals that can access the enterprise network system in this embodiment of the present invention, relay devices are added to the enterprise network system. The relay devices are connected in a tree-like manner, a most upstream relay device is separately connected to the distributor, and a most downstream relay device is configured to connect to at least one terminal.

It should be understood that one of ports of the distributor and the relay devices can be connected to only one device.

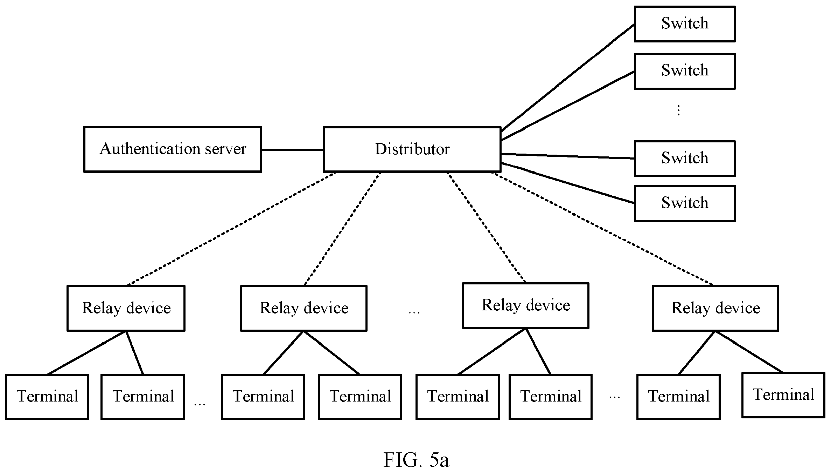

As shown in FIG. 5a, when only one layer of relay devices are included, a most upstream relay device and a most downstream relay device are a same relay device. Each relay device is connected to one port of the distributor by using one port, and each of other ports of each relay device is configured to connect to one terminal.

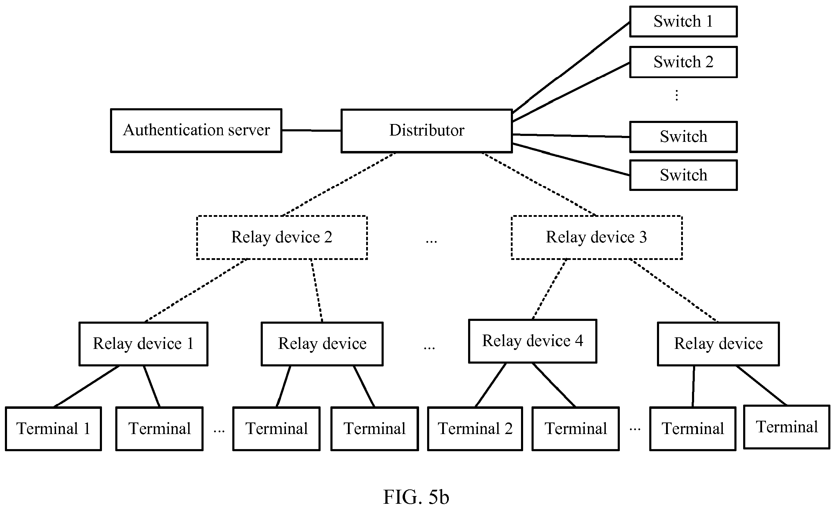

As shown in FIG. 5b, when two layers of relay devices are included, each of most upstream relay devices is connected to one port of the distributor by using one port, another port of each of the most upstream relay devices is separately connected to one port of a most downstream relay device, and another port of the most downstream device is configured to separately connect to one terminal.

For example, a relay device includes five ports. If one port of a most upstream relay device is connected to one port of the distributor, the other four ports may be separately connected to a most downstream relay device.

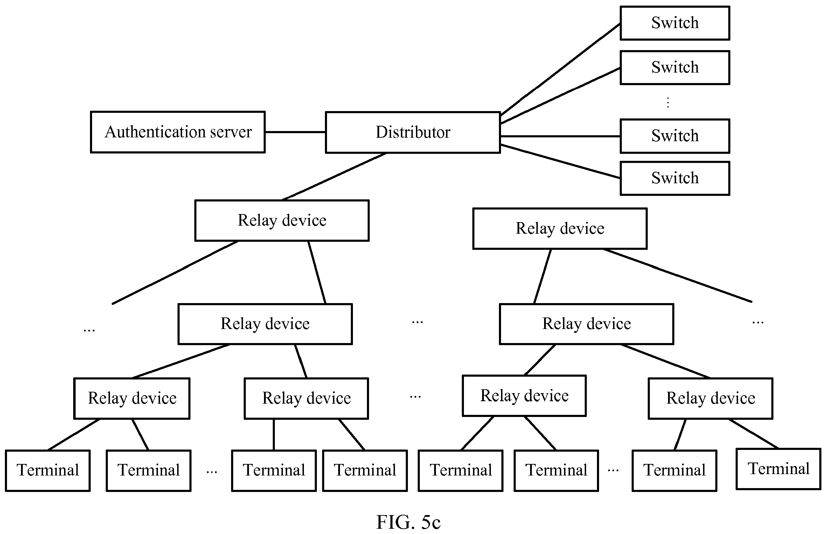

As shown in FIG. 5c, when three layers of relay devices are included, each of most upstream relay devices is connected to one port of the distributor by using one port, another port of each of the most upstream relay devices is separately connected to one port of a downstream relay device, another port of the most downstream relay device is configured to separately connect to one port of a most downstream relay device, and another port of the most downstream device is configured to separately connect to one terminal.

When more terminals need to be accessed, a layer quantity of relay devices may be further extended, such as four layers and five layers. A specific connection manner is similar to connection manners in FIG. 5a to FIG. 5c. Details are not described herein again.

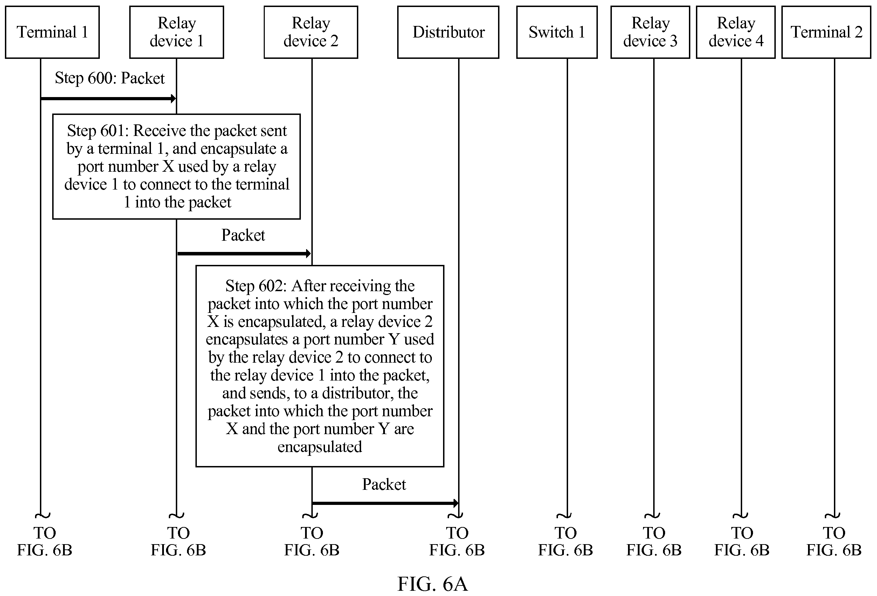

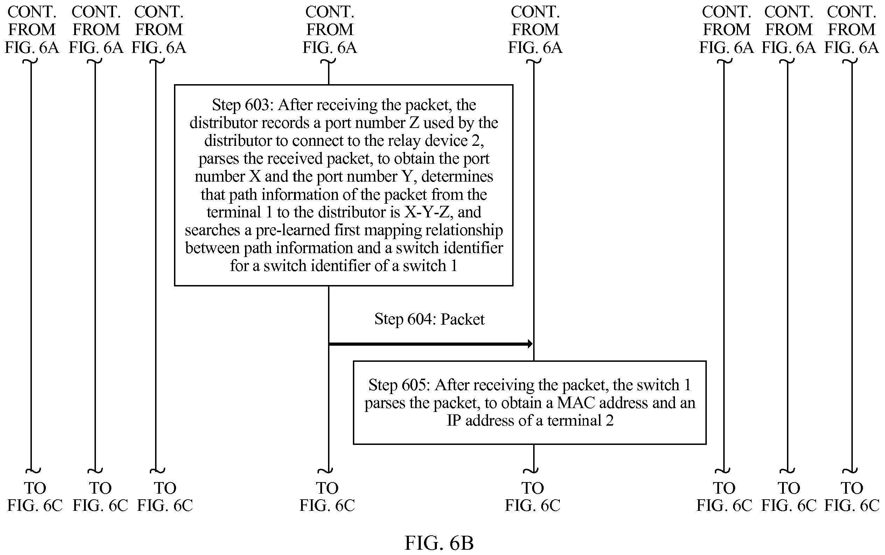

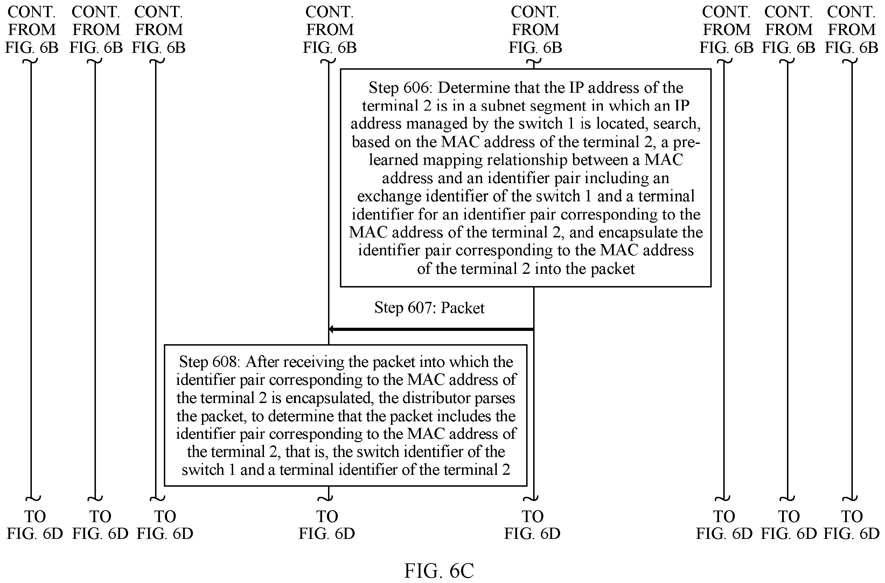

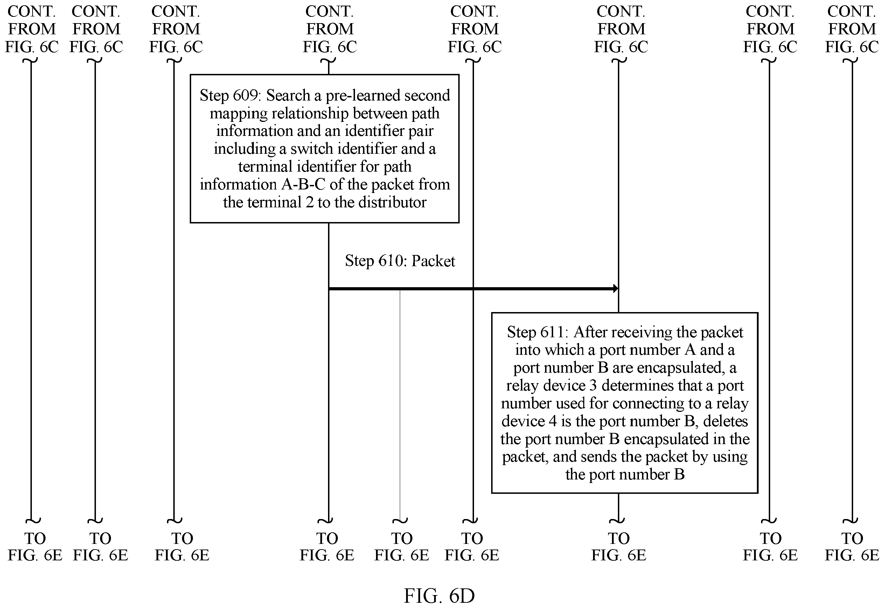

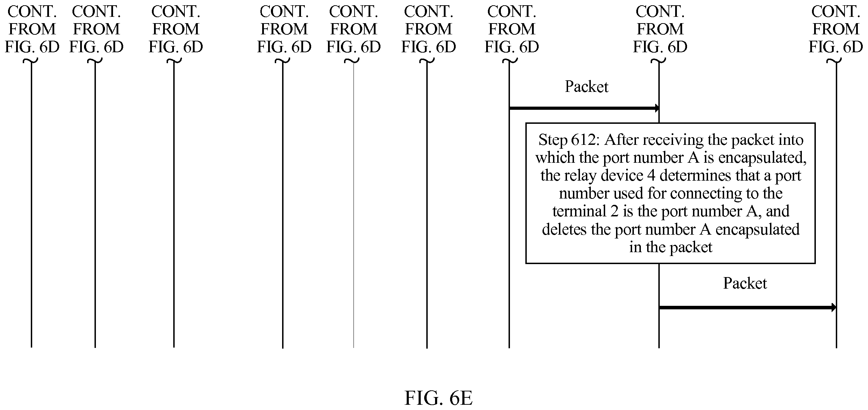

As shown in FIG. 6A, FIG. 6B, FIG. 6C, FIG. 6D, and FIG. 6E, FIG. 5b is used as an example. It is assumed that a terminal 1 and a terminal 2 are managed by a switch 1. When the terminal 1 needs to send a packet to the terminal 2, a packet transmission method includes the following steps.

Step 600: The terminal 1 sends a packet to a relay device 1.

Step 601: The relay device 1 receives the packet sent by the terminal 1, encapsulates a port number X used by the relay device 1 to connect to the terminal 1 into the packet, and sends, to a relay device 2, the packet into which the port number X is encapsulated.

In specific implementation, the port number X may be encapsulated into a packet header of the packet. In this embodiment of the present invention, the terminal 1 is a downstream device of the relay device 1, and the relay device 1 is a downstream device of the relay device 2.

Step 602: After receiving the packet into which the port number X is encapsulated, the relay device 2 encapsulates a port number Y used by the relay device 2 to connect to the relay device 1 into the packet, and sends, to a distributor, the packet into which the port number X and the port number Y are encapsulated.

Step 603: After receiving the packet, the distributor records a port number Z used by the distributor to connect to the relay device 2, parses the received packet, to obtain the port number X and the port number Y, determines that path information of the packet from the terminal 1 to the distributor is X-Y-Z, and searches a pre-learned first mapping relationship between path information and a switch identifier for a switch identifier of the switch 1.

Optionally, after obtaining the port number X and the port number Y through parsing, the distributor deletes the port number X and the port number Y that are encapsulated in the packet.

Step 604: The distributor sends the packet to the switch 1 based on the switch identifier of the switch 1.

Step 605: After receiving the packet, the switch 1 parses the packet, to obtain a MAC address and an IP address of the terminal 2.

Step 606: The switch 1 determines that the IP address of the terminal 2 is in a subnet segment in which an IP address managed by the switch 1 is located, searches, based on the MAC address of the terminal 2, a pre-learned mapping relationship between a MAC address and an identifier pair including an exchange identifier of the switch 1 and a terminal identifier for an identifier pair corresponding to the MAC address of the terminal 2, and encapsulates the identifier pair corresponding to the MAC address of the terminal 2 into the packet.

Step 607: The switch 1 sends, to the distributor, the packet into which the identifier pair corresponding to the MAC address of the terminal 2 is encapsulated.

Step 608: After receiving the packet into which the identifier pair corresponding to the MAC address of the terminal 2 is encapsulated, the distributor parses the packet, to determine that the packet includes the identifier pair corresponding to the MAC address of the terminal 2, that is, the switch identifier of the switch 1 and a terminal identifier of the terminal 2.

In addition, after determining that the IP address of the terminal 2 is in the subnet segment in which the IP address managed by the switch 1 is located, the switch 1 sets an inter-group exchange identifier to 0, to notify the distributor that the terminal 1 and the terminal 2 are managed by a same switch, and the switch 1 encapsulates the inter-group exchange identifier 0 into the packet header of the packet, and sends the inter-group exchange identifier 0 to the distributor. After parsing the packet, the distributor obtains the inter-group exchange identifier 0, determines that the current packet transmission is intra-group exchange, and then determines that the packet includes the identifier pair corresponding to the MAC address of the terminal 2.

Step 609: The distributor searches a pre-learned second mapping relationship between path information and an identifier pair including a switch identifier and a terminal identifier for path information A-B-C of the packet from the terminal 2 to the distributor.

Step 610: The distributor encapsulates a port number A and a port number B into the packet, and sends, to a relay device 3 by using a port number C used for connecting to the relay device 3, the packet into which the port number A and the port number B are encapsulated.

Step 611: After receiving the packet into which the port number A and the port number B are encapsulated, the relay device 3 determines that a port number used for connecting to a relay device 4 is the port number B, deletes the port number B encapsulated in the packet, and sends, to the relay device 4 by using the port number B, the packet into which the port number A is encapsulated.

Step 612: After receiving the packet into which the port number A is encapsulated, the relay device 4 determines that a port number used for connecting to the terminal 2 is the port number A, deletes the port number A encapsulated in the packet, and sends the packet to the terminal 2 by using the port number A.

When the terminal 1 sends the packet to the distributor for a first time, in step 603, a mapping relationship between the path information of the packet from the terminal 1 to the distributor and a switch identifier of a switch that manages the terminal 1 is not stored in the pre-learned first mapping relationship in the distributor. In this case, a specific process in which the distributor specifically learns and stores the mapping relationship between the path information of the packet from the terminal 1 to the distributor and the switch identifier of the switch that manages the terminal 1 is the same as the specific process in which the distributor specifically learns and stores the mapping relationship between the recorded port number 10 used for connecting to the terminal 1 and the switch identifier of the switch that manages the terminal 1 in packet transmission shown in FIG. 3. Details are not described herein again.

Specifically, when the terminal 1 sends the packet by using an enterprise network system for a first time, the switch 1 does not store a mapping relationship between a MAC address of the terminal 1 and an identifier pair including an exchange identifier of the switch 1 and a terminal identifier of the terminal 1. Therefore, before the distributor sends the packet to the switch 1, a specific process in which the switch 1 learns and stores the mapping relationship between the MAC address of the terminal 1 and the identifier pair including the exchange identifier of the switch 1 and the terminal identifier of the terminal 1 is the same as the specific process in which the switch 1 learns and stores the mapping relationship between the MAC address of the terminal 1 and the identifier pair including the exchange identifier of the switch 1 and the terminal identifier of the terminal 1 in packet transmission shown in FIG. 3. Details are not described herein again.

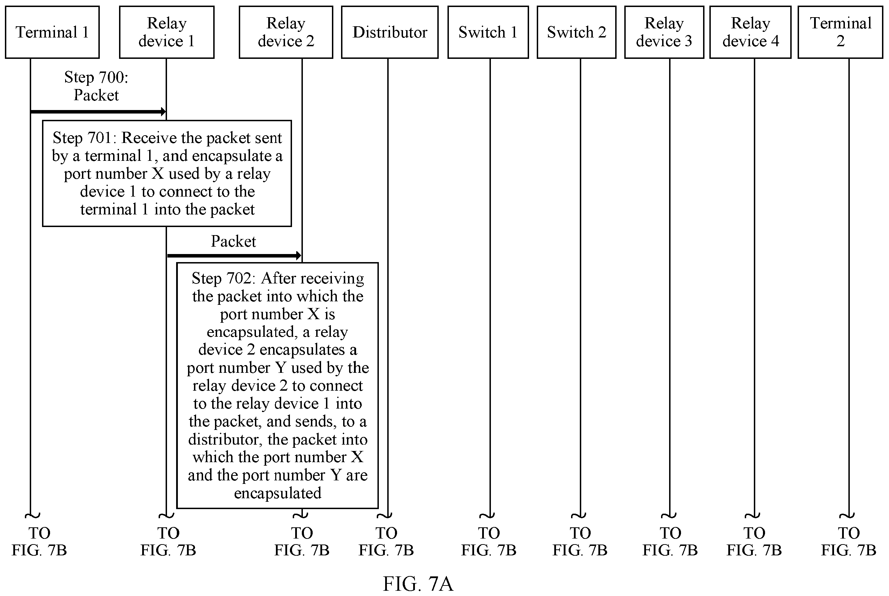

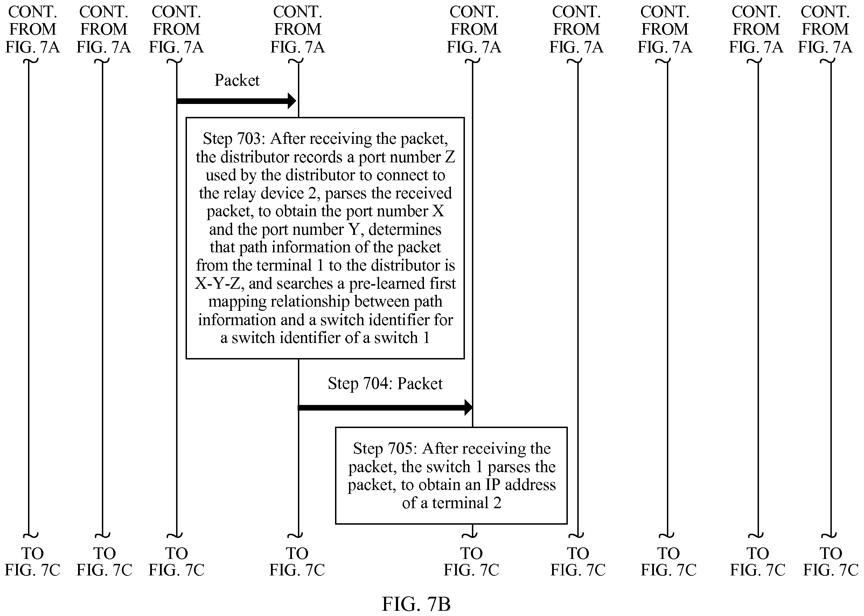

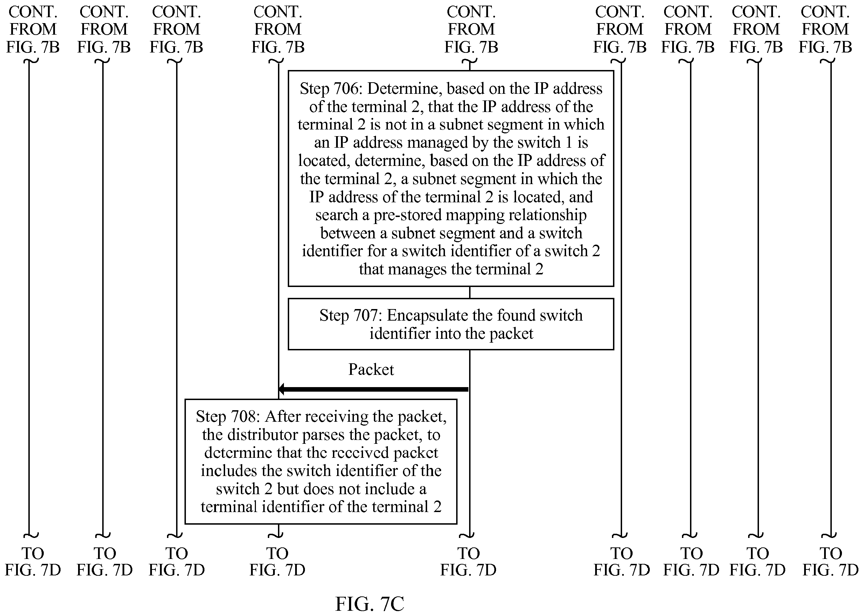

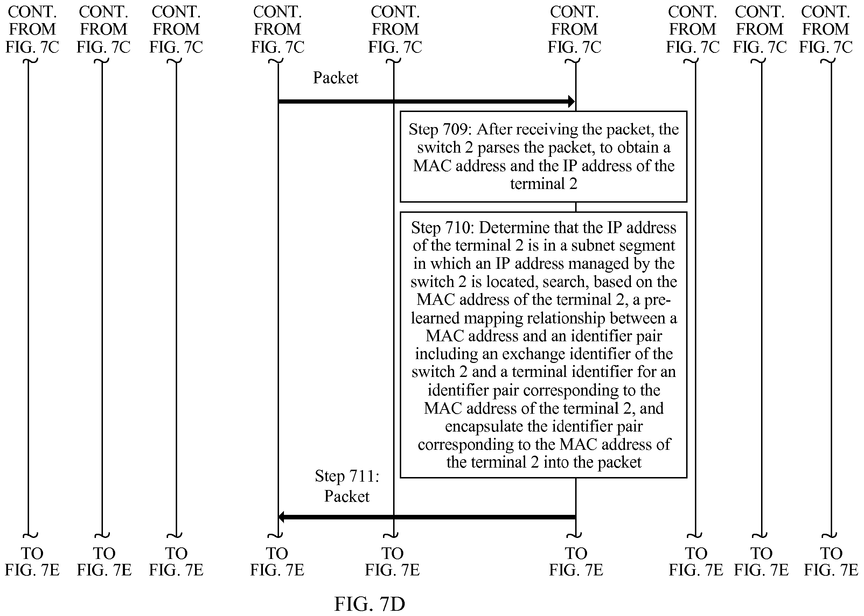

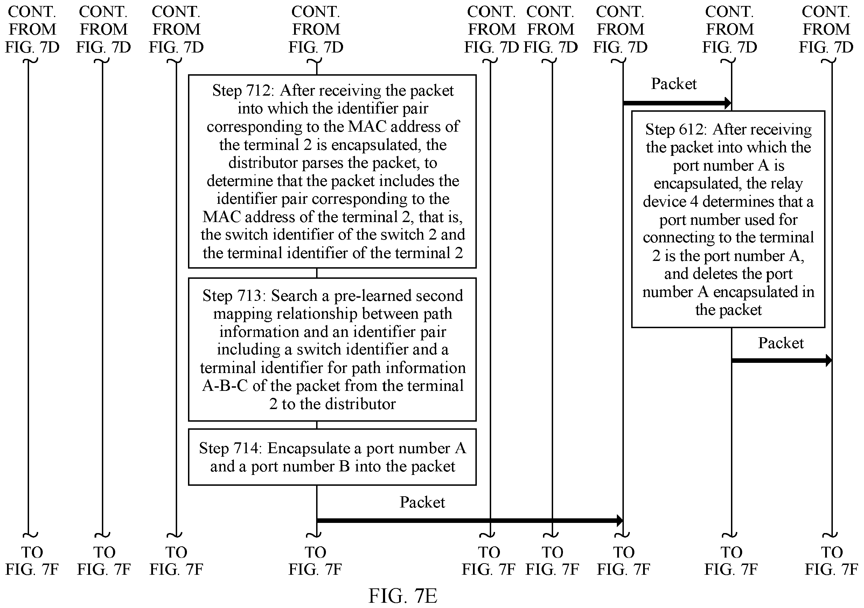

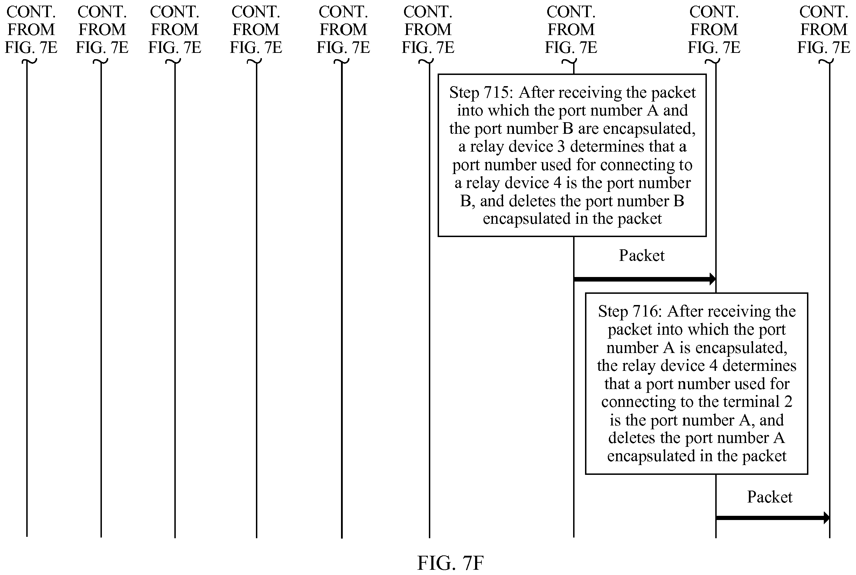

As shown in FIG. 7A, FIG. 7B, FIG. 7C, FIG. 7D, FIG. 7E, and FIG. 7F, FIG. 5b is used as an example. It is assumed that a terminal 1 is managed by a switch 1, and a terminal 2 is managed by a switch 2. When the terminal 1 needs to send a packet to the terminal 2, a packet transmission method includes the following steps.

Step 700: The terminal 1 sends a packet to a relay device 1.

Step 701: The relay device 1 receives the packet sent by the terminal 1, encapsulates a port number X used by the relay device 1 to connect to the terminal 1 into the packet, and sends, to a relay device 2, the packet into which the port number X is encapsulated.

In specific implementation, the port number X may be encapsulated into a packet header of the packet. In this embodiment of the present invention, the terminal 1 is a downstream device of the relay device 1, and the relay device 1 is a downstream device of the relay device 2.

Step 702: After receiving the packet into which the port number X is encapsulated, the relay device 2 encapsulates a port number Y used by the relay device 2 to connect to the relay device 1 into the packet, and sends, to a distributor, the packet into which the port number X and the port number Y are encapsulated.

Step 703: After receiving the packet, the distributor records a port number Z used by the distributor to connect to the relay device 2, parses the received packet, to obtain the port number X and the port number Y, determines that path information of the packet from the terminal 1 to the distributor is X-Y-Z, and searches a pre-learned first mapping relationship between path information and a switch identifier for a switch identifier of the switch 1.

Optionally, after obtaining the port number X and the port number Y through parsing, the distributor deletes the port number X and the port number Y that are encapsulated in the packet.

Step 704: The distributor sends the packet to the switch 1 based on the switch identifier of the switch 1.

Step 705: After receiving the packet, the switch 1 parses the packet, to obtain an IP address of the terminal 2.

Step 706: The switch 1 determines, based on the IP address of the terminal 2, that the IP address of the terminal 2 is not in a subnet segment in which an IP address managed by the switch 1 is located, determines, based on the IP address of the terminal 2, a subnet segment in which the IP address of the terminal 2 is located, and searches a pre-stored mapping relationship between a subnet segment and a switch identifier for a switch identifier of the switch 2 that manages the terminal 2.

Step 707: The switch 1 encapsulates the found switch identifier into the packet, and sends, to the distributor, the packet into which the switch identifier of the switch 2 is encapsulated.

Step 708: After receiving the packet, the distributor parses the packet, to determine that the received packet includes the switch identifier of the switch 2 but does not include a terminal identifier of the terminal 2, and forwards the received packet to the switch 2.

In addition, after determining that the IP address of the terminal 2 is not in the subnet segment in which the IP address managed by the switch 1 is located, the switch 1 sets an inter-group exchange identifier to 1, to notify the distributor that the terminal 1 and the terminal 2 are separately managed by different switches, and the switch 1 encapsulates the inter-group exchange identifier 1 into the packet header of the packet, and sends the inter-group exchange identifier 1 to the distributor. After parsing the packet, the distributor obtains the inter-group exchange identifier 1, determines that the packet transmission is inter-group exchange, and then determines that the packet includes the switch identifier of the switch 2.

Because the switch 2 does not need to analyze the inter-group exchange identifier of the switch 2, the distributor may delete the inter-group exchange identifier of the switch 2 that is encapsulated in the packet.

Step 709: After receiving the packet, the switch 2 parses the packet, to obtain a MAC address and the IP address of the terminal 2.

Step 710: The switch 2 determines that the IP address of the terminal 2 is in a subnet segment in which an IP address managed by the switch 2 is located, searches, based on the MAC address of the terminal 2, a pre-learned mapping relationship between a MAC address and an identifier pair including an exchange identifier of the switch 2 and a terminal identifier for an identifier pair corresponding to the MAC address of the terminal 2, and encapsulates the identifier pair corresponding to the MAC address of the terminal 2 into the packet.

Step 711: The switch 2 sends, to the distributor, the packet into which the identifier pair corresponding to the MAC address of the terminal 2 is encapsulated.

Step 712: After receiving the packet into which the identifier pair corresponding to the MAC address of the terminal 2 is encapsulated, the distributor parses the packet, to determine that the packet includes the identifier pair corresponding to the MAC address of the terminal 2, that is, the switch identifier of the switch 2 and the terminal identifier of the terminal 2.

Step 713: The distributor searches a pre-learned second mapping relationship between path information and an identifier pair including a switch identifier and a terminal identifier for path information A-B-C of the packet from the terminal 2 to the distributor.

Step 714: The distributor encapsulates a port number A and a port number B into the packet, and sends, to a relay device 3 by using a port number C used for connecting to the relay device 3, the packet into which the port number A and the port number B are encapsulated.

Step 715: After receiving the packet into which the port number A and the port number B are encapsulated, the relay device 3 determines that a port number used for connecting to a relay device 4 is the port number B, deletes the port number B encapsulated in the packet, and sends, to the relay device 4 by using the port number B, the packet into which the port number A is encapsulated.

Step 716: After receiving the packet into which the port number A is encapsulated, the relay device 4 determines that a port number used for connecting to the terminal 2 is the port number A, deletes the port number A encapsulated in the packet, and sends the packet to the terminal 2 by using the port number A.

When the terminal 1 sends the packet to the distributor for a first time, in step 603, a mapping relationship between the path information of the packet from the terminal 1 to the distributor and a switch identifier of a switch that manages the terminal 1 is not stored in the pre-learned first mapping relationship in the distributor. In this case, a specific process in which the distributor specifically learns and stores the mapping relationship between the path information of the packet from the terminal 1 to the distributor and the switch identifier of the switch that manages the terminal 1 is the same as the specific process in which the distributor specifically learns and stores the mapping relationship between the recorded port number 10 used for connecting to the terminal 1 and the switch identifier of the switch that manages the terminal 1 in packet transmission shown in FIG. 3. Details are not described herein again.

Specifically, when the terminal 1 sends the packet by using an enterprise network system for a first time, the switch 1 does not store a mapping relationship between a MAC address of the terminal 1 and an identifier pair including an exchange identifier of the switch 1 and a terminal identifier of the terminal 1. Therefore, before the distributor sends the packet to the switch 1, a specific process in which the switch 1 learns and stores the mapping relationship between the MAC address of the terminal 1 and the identifier pair including the exchange identifier of the switch 1 and the terminal identifier of the terminal 1 is the same as the specific process in which the switch 1 learns and stores the mapping relationship between the MAC address of the terminal 1 and the identifier pair including the exchange identifier of the switch 1 and the terminal identifier of the terminal 1 in packet transmission shown in FIG. 3. Details are not described herein again.

In addition, the relay device 1 mentioned in FIG. 6A, FIG. 6B, FIG. 6C, FIG. 6D, and FIG. 6E and the relay device 4 mentioned in FIG. 7A, FIG. 7B, FIG. 7C, FIG. 7D, FIG. 7E, and FIG. 7F may be a same relay device, or may be different relay devices. The relay device 2 and the relay device 3 may be a same relay device, or may be different relay devices.

Based on a same invention concept, an embodiment of the present invention further provides a packet transmission distributor. A method corresponding to the packet transmission distributor is the packet transmission method in the embodiments of the present invention. Therefore, for implementation of the distributor in this embodiment of the present invention, refer to implementation of the method. No repeated description is provided.

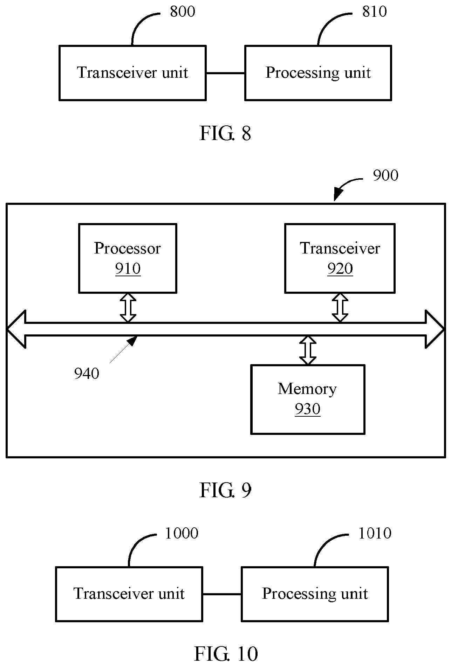

As shown in FIG. 8, a packet transmission distributor in an embodiment of the present invention includes a transceiver unit 800 and a processing unit 810. The transceiver unit 800 is configured to receive a packet sent by a source terminal. The processing unit 810 is configured to: determine path information of the packet from the source terminal to the distributor, and search a pre-learned first mapping relationship between path information and a switch identifier for a first switch identifier based on the determined path information, where the first switch identifier is a switch identifier corresponding to the determined path information. The transceiver unit 800 is further configured to: send the packet to a first switch corresponding to the first switch identifier; and receive a packet fed back by the first switch. The processing unit 810 is further configured to: determine that the packet fed back by the first switch includes the first switch identifier and a destination terminal identifier; and search, based on the first switch identifier and the destination terminal identifier, a pre-learned second mapping relationship between path information and an identifier pair including a switch identifier and a terminal identifier for path information corresponding to an identifier pair including the first switch identifier and the destination terminal identifier. The transceiver unit 800 is further configured to forward, to a destination terminal based on the found path information, the packet sent by the source terminal.

Optionally, the processing unit 810 is further configured to: before the transceiver unit forwards, to the destination terminal, the packet sent by the source terminal, determine that the fed-back packet includes a second switch identifier but does not include the destination terminal identifier. The transceiver unit 800 is further configured to: send the fed-back packet to a second switch corresponding to the second switch identifier, and receive a packet fed back by the second switch, where the packet fed back by the second switch includes the second switch identifier and the destination terminal identifier. The processing unit 810 is further configured to search, based on the second switch identifier and the destination terminal identifier, the pre-learned second mapping relationship between path information and an identifier pair including a switch identifier and a terminal identifier for path information corresponding to an identifier pair including the second switch identifier and the destination terminal identifier.

Optionally, the transceiver unit 800 is further configured to: before sending the packet to the first switch, if the processing unit 810 does not find, based on the first mapping relationship, the switch identifier corresponding to the path information of the packet from the source terminal to the distributor, send a terminal authentication request to an authentication server, where the terminal authentication request includes attribute information of the source terminal, and the authentication server pre-stores a correspondence between attribute information of a terminal and a switch identifier; and receive the first switch identifier that is found by the authentication server and that is corresponding to the attribute information of the source terminal.

Optionally, the processing unit 810 is further configured to: allocate a terminal identifier to the terminal; and store a second mapping relationship between the path information of the packet from the source terminal to the distributor and an identifier pair including the first switch identifier and the allocated terminal identifier.

Optionally, the processing unit 810 is further configured to: before the transceiver unit 800 sends the packet to the first switch, search the second mapping relationship for a source terminal identifier and the first switch identifier based on the path information of the packet from the source terminal to the distributor, where an identifier pair including the source terminal identifier and the first switch identifier is corresponding to the path information of the packet from the source terminal to the distributor; and encapsulate the source terminal identifier and the first switch identifier into the packet.

Optionally, when determining the path information of the packet from the source terminal to the distributor, the processing unit 810 is specifically configured to: parse the packet, to obtain first path information encapsulated in the packet, where the first path information is a port number used, to connect to a downstream device, by each device that is between the source terminal and a downstream device connected to the distributor and that does not include the source terminal but includes the downstream device connected to the distributor; and determine a port number used by the distributor to connect to the downstream device in the first path information, and determine the path information of the packet from the source terminal to the distributor based on the first path information and the determined port number.

It should be noted that, in this embodiment of the present invention, the transceiver unit 800 may be implemented by a transceiver, and the processing unit 810 may be implemented by a processor. As shown in FIG. 9, a distributor 900 may include a processor 910, a transceiver 920, and a memory 930. The memory 930 may be configured to store a program/code pre-installed when the distributor 900 is delivered from a factory, or may store code or the like executed by the processor 910.

Components of the distributor 900 are coupled together by using a bus system 940. In addition to a data bus, the bus system 940 includes a power bus, a control bus, and a status signal bus.

The processor 910 may be a general central processing unit (Central Processing Unit, CPU), a microprocessor, an application-specific integrated circuit (Application-Specific Integrated Circuit, ASIC), or one or more integrated circuits, and is configured to perform a related operation, so as to implement technical solutions provided in the embodiments of the present invention.

It should be noted that, although only the processor 910, the transceiver 920, and the memory 930 are shown for the distributor 900 in FIG. 9, in a specific implementation process, persons skilled in the art should understand that the distributor further includes another device required for implementing normal running. In addition, persons skilled in the art should understand that, based on a specific requirement, the distributor may further include a hardware device that implements another additional function. In addition, persons skilled in the art should understand that the distributor may also include only devices or modules required for implementing the embodiments of the present invention, and does not need to include all the devices shown in FIG. 9.

Persons of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The storage medium may include a magnetic disk, an optical disc, a read-only memory (ROM: Read-Only Memory), a random access memory (RAM: Random Access Memory), or the like.

Based on a same invention concept, an embodiment of the present invention further provides a packet transmission switch. A method corresponding to the packet transmission switch is the packet transmission method in the embodiments of the present invention. Therefore, for implementation of the switch in this embodiment of the present invention, refer to implementation of the method. No repeated description is provided.

As shown in FIG. 10, a packet transmission switch in an embodiment of the present invention includes a transceiver unit 1000 and a processing unit 1010. The processing unit 1010 is configured to: parse a packet from a distributor, to determine first address information and second address information of a destination terminal that needs to receive the packet; after it is determined that the second address information of the destination terminal is in a subnet segment of second address information managed by a first switch, search, based on the first address information of the destination terminal, a pre-stored mapping relationship between first address information and an identifier pair including a first switch identifier and a terminal identifier for an identifier pair in which a destination terminal identifier is located; and encapsulate the found identifier pair into the packet. The transceiver unit 1000 is configured to send the packet to the distributor.

Optionally, the processing unit 1010 is further configured to: if it is determined that the second address information of the destination terminal is not in the subnet segment of the second address information managed by the first switch, determine, based on the second address information of the destination terminal, a subnet segment in which the second address information is located; search, based on the determined subnet segment, a pre-stored mapping relationship between a subnet segment and a switch identifier for a switch identifier corresponding to the determined subnet segment; and encapsulate the switch identifier corresponding to the determined subnet segment into the packet. The transceiver unit 1000 is further configured to send the packet to the distributor.

Optionally, the transceiver unit 1000 is further configured to: before the processing unit 1010 encapsulates the found identifier pair into the packet, if the processing unit 1010 does not find the identifier pair in which the destination terminal identifier is located, broadcast a request for obtaining the destination terminal identifier, where the request for obtaining the destination terminal identifier includes the second address information of the destination terminal; and receive a packet including the destination terminal identifier. The processing unit 1010 is further configured to store a mapping relationship between the first address information of the destination terminal and an identifier pair including the switch identifier and the destination terminal identifier.

Optionally, the processing unit 1010 is further configured to: parse the packet from the distributor, to determine first address information of a source terminal that sends the packet; if it is determined that the pre-stored mapping relationship between first address information and an identifier pair including a switch identifier and a terminal identifier does not include a mapping relationship of the first address information of the source terminal that sends the packet, obtain a source terminal identifier and the switch identifier that are included in the packet; and store a mapping relationship between the first address information of the source terminal that sends the packet and an identifier pair including the source terminal identifier and the switch identifier.

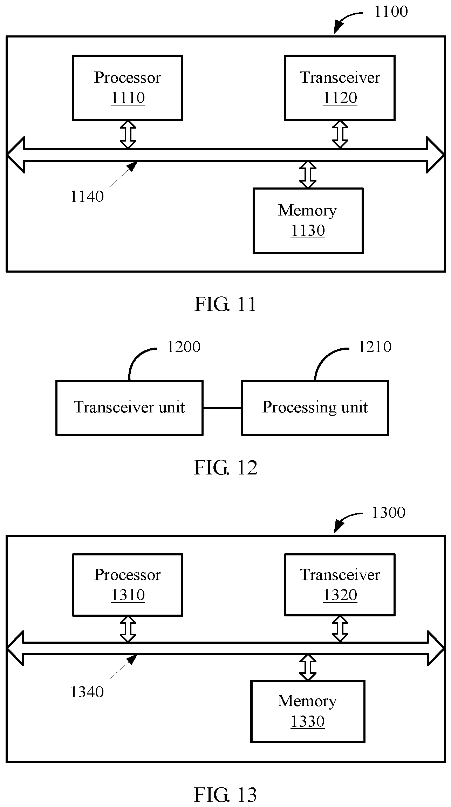

It should be noted that, in this embodiment of the present invention, the transceiver unit 1000 may be implemented by a transceiver, and the processing unit 1010 may be implemented by a processor. As shown in FIG. 11, a switch 1100 may include a processor 1110, a transceiver 1120, and a memory 1130. The memory 1130 may be configured to store a program/code pre-installed when the switch 1100 is delivered from a factory, or may store code or the like executed by the processor 1110.

Components of the switch 1100 are coupled together by using a bus system 1140. In addition to a data bus, the bus system 1140 includes a power bus, a control bus, and a status signal bus.

The processor 1110 may be a general central processing unit (Central Processing Unit, CPU), a microprocessor, an application-specific integrated circuit (Application-Specific Integrated Circuit, ASIC), or one or more integrated circuits, and is configured to perform a related operation, so as to implement technical solutions provided in the embodiments of the present invention.

It should be noted that, although only the processor 1110, the transceiver 1120, and the memory 1130 are shown for the switch 1100 in FIG. 11, in a specific implementation process, persons skilled in the art should understand that the switch further includes another device required for implementing normal running. In addition, persons skilled in the art should understand that, based on a specific requirement, the switch may further include a hardware device that implements another additional function. In addition, persons skilled in the art should understand that the switch may also include only devices or modules required for implementing the embodiments of the present invention, and does not need to include all the devices shown in FIG. 11.

Persons of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The storage medium may include a magnetic disk, an optical disc, a read-only memory (ROM: Read-Only Memory), a random access memory (RAM: Random Access Memory), or the like.

Based on a same invention concept, an embodiment of the present invention further provides a packet transmission relay device. A method corresponding to the packet transmission relay device is the packet transmission method in the embodiments of the present invention. Therefore, for implementation of the relay device in this embodiment of the present invention, refer to implementation of the method. No repeated description is provided.

As shown in FIG. 12, a packet transmission relay device includes a transceiver unit 1200 and a processing unit 1210. The transceiver unit 1200 is configured to receive a packet of a first downstream device connected to the relay device. The processing unit 1210 is configured to: determine a port number used for connecting to the first downstream device, and encapsulate the determined accessed port number into the packet. The transceiver unit 1200 is further configured to send the packet to a first upstream device connected to the relay device.

Optionally, the transceiver unit 1200 is further configured to receive a packet of a second upstream device connected to the relay device. The processing unit 1210 is further configured to: determine, based on path information included in the packet, a port number used by the relay device to connect to a second downstream device, where the path information is a port number used, to connect to a downstream device, by each device that is between the relay device and a destination terminal and that does not include the destination terminal but includes the relay device; and delete the port number used by the relay device in the path information to connect to the second downstream device. The transceiver unit 1200 is further configured to send the packet to the second downstream device by using the port number used by the relay device to connect to the second downstream device.

It should be noted that, the transceiver unit 1200 may be implemented by a transceiver, and the processing unit 1210 may be implemented by a processor. As shown in FIG. 13, a relay device 1300 may include a processor 1310, a transceiver 1320, and a memory 1330. The memory 1330 may be configured to store a program/code pre-installed when the relay device 1300 is delivered from a factory, or may store code or the like executed by the processor 1310.

Components of the relay device 1300 are coupled together by using a bus system 1340. In addition to a data bus, the bus system 1340 includes a power bus, a control bus, and a status signal bus.

The processor 1310 may be a general central processing unit (Central Processing Unit, CPU), a microprocessor, an application-specific integrated circuit (Application-Specific Integrated Circuit, ASIC), or one or more integrated circuits, and is configured to perform a related operation, so as to implement technical solutions provided in the embodiments of the present invention.

It should be noted that, although only the processor 1310, the transceiver 1320, and the memory 1330 are shown for the relay device 1300 in FIG. 13, in a specific implementation process, persons skilled in the art should understand that the relay device further includes another device required for implementing normal running. In addition, persons skilled in the art should understand that, based on a specific requirement, the relay device may further include a hardware device that implements another additional function. In addition, persons skilled in the art should understand that the relay device does not need to include all the devices shown in FIG. 13.

Persons of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The storage medium may include a magnetic disk, an optical disc, a read-only memory (ROM: Read-Only Memory), a random access memory (RAM: Random Access Memory), or the like.

In can be learned from the foregoing content that the network system includes a distributor and at least one switch, and the distributor is separately connected to the at least one switch. Because the switch can centrally forward packets by using the distributor, a port quantity of the switch in the network system is greatly reduced, and further, complexity of managing and maintaining the network system is reduced.

Persons skilled in the art should understand that the embodiments of the present invention may be provided as a method or apparatus. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the methods and devices according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of the present invention have been described, persons skilled in the art can make changes and modifications to these embodiments once they learn the basic inventive concept.

Obviously, persons skilled in the art can make various modifications and variations to the present invention without departing from the scope of the present invention. The present invention is intended to cover these modifications and variations provided that they fall within the scope of protection defined by the following claims.

## Claims

1. A packet transmission method, comprising:
receiving (300), by a distributor, a packet sent by a source terminal, wherein the packet comprises destination information of a destination terminal for the packet;
determining (301) path information of the packet from the source terminal to the distributor, and searching a pre-learned first mapping relationship between path information and a switch identifier for a first switch identifier which corresponds to the determined path information;
sending (302), by the distributor, the packet to a first switch corresponding to the first switch identifier;
receiving (305), by the distributor, a packet fed back by the first switch,
wherein the fed-back packet corresponds to the packet into which an identifier pair has been encapsulated, and
wherein the identifier pair is composed of the first switch identifier and a terminal identifier;
determining (306) that the packet fed back by the first switch comprises the identifier pair,
wherein the terminal identifier in the identifier pair corresponds to a destination terminal identifier;
searching (307), by the distributor, a pre-learned second mapping relationship between path information and the identifier pair for second path information corresponding to the destination terminal identifier; and
forwarding (308), by the distributor to the destination terminal based on the second path information, the packet sent by the source terminal.

2. The method according to claim 1, before the forwarding, by the distributor to the destination terminal, the packet sent by the source terminal, further comprising:
determining, by the distributor, that the fed-back packet comprises a second switch identifier but does not comprise the destination terminal identifier;
sending, by the distributor, the fed-back packet to a second switch corresponding to the second switch identifier;
receiving, by the distributor, a packet fed back by the second switch, wherein the packet fed back by the second switch comprises the second switch identifier and the destination terminal identifier; and
searching, by the distributor, the second mapping relationship between path information and an identifier pair for third path information corresponding to an identifier pair composed of the second switch identifier and the destination terminal identifier.

3. The method according to claim 1 or 2, before the sending, by the distributor, the packet to the first switch, further comprising:
when the distributor does not find, based on the first mapping relationship, the switch identifier corresponding to the path information of the packet from the source terminal to the distributor, sending, by the distributor, a terminal authentication request to an authentication server, wherein the terminal authentication request comprises attribute information of the source terminal, and the authentication server pre-stores a correspondence between attribute information of a terminal and a switch identifier; and
receiving, by the distributor, the first switch identifier that is found by the authentication server and that is corresponding to the attribute information of the source terminal.

4. The method according to claim 3, further comprising:
allocating, by the distributor, a terminal identifier to the source terminal; and
storing, by the distributor, the second mapping relationship between the path information of the packet from the source terminal to the distributor and an identifier pair composed of the first switch identifier and the allocated terminal identifier.

5. The method according to any one of claims 1 to 4, before the sending, by the distributor, the packet to the first switch, further comprising:
searching, by the distributor, the second mapping relationship for a source terminal identifier and the first switch identifier based on the path information of the packet from the source terminal to the distributor, wherein an identifier pair composed of the source terminal identifier and the first switch identifier is corresponding to the path information of the packet from the source terminal to the distributor; and
encapsulating, by the distributor, the source terminal identifier and the first switch identifier into the packet.

6. The method according to any one of claims 1 to 5, wherein the determining, by the distributor, path information of the packet from the source terminal to the distributor comprises:
parsing, by the distributor, the packet, to obtain first path information encapsulated in the packet, wherein the first path information is a port number of the distributor used, to connect to a downstream device,
wherein one or more downstream devices are located on a path between the source terminal and the distributor;; and
determining, by the distributor, the port number of the distributor used for connecting to the downstream device in the first path information, and determining the path information of the packet from the source terminal to the distributor based on the determined port number of the distributor.

7. A packet transmission method, comprising:
parsing (403), by a first switch, a packet from a distributor, to determine first address information and second address information of a destination terminal that needs to receive the packet;
after determining that the second address information of the destination terminal is in a subnet segment of second address information managed by the first switch, searching (404), by the first switch based on the first address information of the destination terminal, a pre-stored mapping relationship between first address information and an identifier pair composed of a first switch identifier and a terminal identifier for an identifier pair in which a destination terminal identifier is located; and
encapsulating (405), by the first switch, the found identifier pair into the packet, and sending the packet to the distributor.

8. The method according to claim 7, further comprising:
when the first switch determines that the second address information of the destination terminal is not in the subnet segment of the second address information managed by the first switch, determining, by the first switch based on the second address information of the destination terminal, a subnet segment in which the second address information is located;
searching, by the first switch, the pre-stored mapping relationship between a subnet segment and a switch identifier for a second switch identifier based on the determined subnet segment, wherein the second switch identifier is corresponding to the determined subnet segment; and
encapsulating, by the first switch, the second switch identifier into the packet, and sending the packet to the distributor.

9. The method according to claim 7, wherein before the encapsulating, by the first switch, the found identifier pair into the packet, further comprising:
when the first switch does not find the identifier pair in which the destination terminal identifier is located, broadcasting, by the first switch, a request for obtaining the destination terminal identifier, wherein the request for obtaining the destination terminal identifier comprises the second address information of the destination terminal; and
receiving, by the first switch, a packet comprising the destination terminal identifier, and storing a mapping relationship between the first address information of the destination terminal and an identifier pair composed of the first switch identifier and the destination terminal identifier.

10. The method according to any one of claims 7 to 9, further comprising:
parsing, by the first switch, the packet from the distributor, to determine first address information of a source terminal which sends the packet;
when the first switch determines that the pre-stored mapping relationship between first address information and an identifier pair composed of a first switch identifier and a terminal identifier does not comprise a mapping relationship of the first address information of the source terminal which sends the packet, obtaining, by the first switch, a source terminal identifier and the first switch identifier that are comprised in the packet; and
storing, by the first switch, a mapping relationship between the first address information of the source terminal which sends the packet and an identifier pair composed of the source terminal identifier and the first switch identifier.

11. A packet transmission distributor, comprising:
a transceiver unit (800), configured to receive a packet sent by a source terminal, wherein the packet comprises destination information of a destination terminal for the packet; and
a processing unit (810), configured to: determine path information of the packet from the source terminal to the distributor, and search a pre-learned first mapping relationship between path information and a switch identifier for a first switch identifier which corresponds to the determined path information; wherein
the transceiver unit is further configured to: send the packet to a first switch corresponding to the first switch identifier; and receive a packet fed back by the first switch,
wherein the fed-back packet corresponds to the packet into which an identifier pair has been encapsulated, and
wherein the identifier pair is composed of the first switch identifier and a terminal identifier;
the processing unit is further configured to: determine that the packet fed back by the first switch comprises the identifier pair; and search a pre-learned second mapping relationship between path information and the identifier pair for second path information corresponding to the destination terminal identifier; and
the transceiver unit is further configured to forward, to the destination terminal based on the second path information, the packet sent by the source terminal.

12. A packet transmission switch, comprising:
a processing unit (1010), configured to: parse a packet from a distributor, to determine first address information and second address information of a destination terminal that needs to receive the packet; after it is determined that the second address information of the destination terminal is in a subnet segment of second address information managed by a first switch, search, based on the first address information of the destination terminal, a pre-stored mapping relationship between first address information and an identifier pair composed of a first switch identifier and a terminal identifier for an identifier pair in which a destination terminal identifier is located; and encapsulate the found identifier pair into the packet; and
a transceiver unit (1000), configured to send the packet to the distributor.

## Patentansprüche

1. Paketübertragungsverfahren, umfassend:
Empfangen (300), durch einen Verteiler, eines von einem Quellenendgerät gesendeten Pakets, wobei das Paket Zielinformationen eines Zielendgeräts für das Paket umfasst;
Bestimmen (301) von Pfadinformationen des Pakets von dem Quellenendgerät zum Verteiler und Suchen einer zuvor erlernten ersten Zuordnungsbeziehung zwischen Pfadinformationen und einer Schalterkennung für eine erste Schalterkennung, die den bestimmten Pfadinformationen entspricht;
Senden (302), durch den Verteiler, des Pakets an einen ersten Schalter, der der ersten Schalterkennung entspricht;
Empfangen (305), durch den Verteiler, eines Pakets, das von dem ersten Schalter zurückgegeben wird,
wobei das zurückgegebene Paket dem Paket entspricht, in das ein Kennungspaar eingekapselt wurde, und
wobei das Kennungspaar aus der ersten Schalterkennung und einer Endgerätekennung besteht;
Bestimmen (306), dass das von dem ersten Schalter zurückgegebene Paket das Kennungspaar umfasst,
wobei die Endgerätekennung in dem Kennungspaar einer Zielendgerätekennung entspricht;
Suchen (307), durch den Verteiler, einer zuvor erlernten zweiten Zuordnungsbeziehung zwischen Pfadinformationen und dem Kennungspaar für zweite Pfadinformationen, die der Zielendgerätekennung entsprechen; und
Weiterleiten (308), durch den Verteiler an das Zielendgerät basierend auf den zweiten Pfadinformationen, des von dem Quellenendgerät gesendeten Pakets.

2. Verfahren nach Anspruch 1, das vor dem Weiterleiten, durch den Verteiler an das Zielendgerät, des von dem Quellenendgerät gesendeten Pakets ferner Folgendes umfasst:
Bestimmen, durch den Verteiler, dass das zurückgegebene Paket eine zweite Schalterkennung umfasst, jedoch nicht die Zielendgerätekennung umfasst;
Senden, durch den Verteiler, des zurückgegebenen Pakets an einen zweiten Schalter, der der zweiten Schalterkennung entspricht;
Empfangen, durch den Verteiler, eines von dem zweiten Schalter zurückgegebenen Pakets, wobei das von dem zweiten Schalter zurückgegebene Paket die zweite Schalterkennung und die Zielendgerätekennung umfasst; und
Suchen, durch den Verteiler, der zweiten Zuordnungsbeziehung zwischen Pfadinformationen und einem Kennungspaar für dritte Pfadinformationen, die einem Kennungspaar entsprechen, das aus der zweiten Schalterkennung und der Zielendgerätekennung besteht.

3. Verfahren nach Anspruch 1 oder 2, das vor dem Senden, durch den Verteiler, des Pakets an den ersten Schalter ferner Folgendes umfasst:
wenn der Verteiler, basierend auf der ersten Zuordnungsbeziehung, die Schalterkennung, die den Pfadinformationen des Pakets von dem Quellenendgerät zum Verteiler entspricht, nicht findet, Senden, durch den Verteiler, einer Endgeräteauthentifizierunganforderung an einen Authentifizierungsserver, wobei die Endgeräteauthentifizierungsanforderung Attributinformationen des Quellenendgeräts umfasst und der Authentifizierungsserver eine Entsprechung zwischen Attributinformationen eines Endgeräts und einer Schalterkennung vorab speichert; und
Empfangen, durch den Verteiler, der ersten Schalterkennung, die von dem Authentifizierungsserver gefunden wird und die den Attributinformationen des Quellenendgeräts entspricht.

4. Verfahren nach Anspruch 3, ferner umfassend:
Zuweisen, durch den Verteiler, einer Endgerätekennung zu dem Quellenendgerät; und Speichern, durch den Verteiler, der zweiten Zuordnungsbeziehung zwischen den Pfadinformationen des Pakets von dem Quellenendgerät zum Verteiler und eines Kennungspaars, das aus der ersten Schalterkennung und der zugewiesenen Endgerätekennung besteht.

5. Verfahren nach einem beliebigen der Ansprüche 1 bis 4, das vor dem Senden, durch den Verteiler, des Pakets an den ersten Schalter ferner Folgendes umfasst:
Suchen, durch den Verteiler, der zweiten Zuordnungsbeziehung für eine Quellenendgerätekennung und die erste Schalterkennung basierend auf den Pfadinformationen des Pakets von dem Quellenendgerät zum Verteiler, wobei ein aus der Quellenendgerätekennung und der ersten Schalterkennung bestehendes Kennungspaar den Pfadinformationen des Pakets von dem Quellenendgerät zu dem Verteiler entspricht; und
Einkapseln, durch den Verteiler, der Quellenendgerätekennung und der ersten Schalterkennung in dem Paket.

6. Verfahren nach einem der Ansprüche 1 bis 5, wobei das Bestimmen, durch den Verteiler, von Pfadinformationen des Pakets von dem Quellenendgerät zum Verteiler Folgendes umfasst:
Parsen, durch den Verteiler, des Pakets, um in dem Paket eingekapselte erste Pfadinformationen zu erhalten, wobei die ersten Pfadinformationen eine Portnummer des Verteilers sind, der verwendet wurde, um eine Verbindung zu einem nachgelagerten Gerät herzustellen,
wobei sich ein oder mehrere nachgelagerte Geräte auf einem Pfad zwischen dem Quellenendgerät und dem Verteiler befinden; und
Bestimmen, durch den Verteiler, der Portnummer des Verteilers, der verwendet wird, um eine Verbindung zu einem nachgelagerten Gerät herzustellen, in den ersten Pfadinformationen, und Bestimmen der Pfadinformationen des Pakets von dem Quellenendgerät zu dem Verteiler basierend auf der bestimmten Portnummer des Verteilers.

7. Paketübertragungsverfahren, umfassend:
Parsen (403), durch einen ersten Schalter, eines Pakets von einem Verteiler, um erste Adressinformationen und zweite Adressinformationen eines Zielendgeräts zu bestimmen, welches das Paket empfangen muss;
nach dem Bestimmen, dass die zweiten Adressinformationen des Zielendgeräts sich in einem Teilnetzsegment der zweiten Adressinformationen befinden, das von dem ersten Schalter verwaltet wird, Suchen (404), durch den ersten Schalter basierend auf den ersten Adressinformationen des Zielendgeräts, nach einer vorgespeicherten Zuordnungsbeziehung zwischen ersten Adressinformationen und einem Kennungspaar, das aus einer ersten Schalterkennung und einer Endgerätekennung besteht, für ein Kennungspaar, in dem sich eine Zielendgerätekennung befindet; und Einkapseln (405), durch den ersten Schalter, des gefundenen Kennungspaars in dem Paket und Senden des Pakets an den Verteiler.

8. Verfahren nach Anspruch 7, ferner umfassend:
wenn der erste Schalter bestimmt, dass die zweiten Adressinformationen des Zielendgeräts sich nicht in dem Teilnetzsegment der zweiten Adressinformationen befinden, das von dem ersten Schalter verwaltet wird, Bestimmen, durch den ersten Schalter basierend auf den zweiten Adressinformationen des Zielendgeräts, eines Teilnetzsegments, in dem sich die zweiten Adressinformationen befinden;
Suchen, durch den ersten Schalter, der vorgespeicherten Zuordnungsbeziehung zwischen einem Teilnetzsegment und einer Schalterkennung für eine zweite Schalterkennung basierend auf dem bestimmten Teilnetzsegment, wobei die zweite Schalterkennung dem bestimmten Teilnetzsegment entspricht; und
Einkapseln, durch den ersten Schalter, der zweiten Schalterkennung in dem Paket und Senden des Pakets an den Verteiler.

9. Verfahren nach Anspruch 7, das, vor dem Einkapseln, durch den ersten Schalter, des gefundenen Kennungspaars in dem Paket, ferner Folgendes umfasst:
wenn der erste Schalter das Kennungspaar, in dem sich die Zielendgerätekennung befindet, nicht findet, Rundsenden, durch den ersten Schalter, einer Anforderung zum Erhalten der Zielendgerätekennung, wobei die Anforderung zum Erhalten der Zielendgerätekennung die zweiten Adressinformationen des Zielendgeräts enthält; und
Empfangen, durch den ersten Schalter, eines Pakets, das die Zielendgerätekennung umfasst, und Speichern einer Zuordnungsbeziehung zwischen den ersten Adressinformationen des Zielendgeräts und einem Kennungspaar, das aus der ersten Schalterkennung und der Zielendgerätekennung besteht.

10. Verfahren nach einem der Ansprüche 7 bis 9, ferner umfassend:
Parsen, durch den ersten Schalter, des Pakets von dem Verteiler, um die ersten Adressinformationen eines Quellenendgeräts zu bestimmen, welches das Paket sendet;
wenn der erste Schalter bestimmt, dass die vorgespeicherte Zuordnungsbeziehung zwischen ersten Adressinformationen und einem Kennungspaar, das aus einer ersten Schalterkennung und einer Endgerätekennung besteht, keine Zuordnungsbeziehung der ersten Adressinformationen des Quellenendgeräts umfasst, welches das Paket sendet, Erhalten, durch den ersten Schalter, einer Quellenendgerätekennung und der ersten Schalterkennung, die in dem Paket enthalten sind; und
Speichern, durch den ersten Schalter, einer Zuordnungsbeziehung zwischen den ersten Adressinformationen des Quellenendgeräts, welches das Paket sendet, und einem Kennungspaar, das aus der Quellenendgerätkennung und der ersten Schalterkennung besteht.

11. Paketübertragungsverteiler, umfassend:
eine Transceivereinheit (800), die konfiguriert ist, ein von einem Quellenendgerät gesendetes Paket zu empfangen, wobei das Paket Zielinformationen eines Zielendgeräts für das Paket umfasst; und
eine Verarbeitungseinheit (810), die zu Folgendem konfiguriert ist: Bestimmen von Pfadinformationen des Pakets von dem Quellenendgerät zum Verteiler und Suchen einer zuvor erlernten ersten Zuordnungsbeziehung zwischen Pfadinformationen und einer Schalterkennung für eine erste Schalterkennung, die den bestimmten Pfadinformationen entspricht;
wobei die Transceivereinheit ferner zu Folgendem konfiguriert ist: Senden des Pakets an einen ersten Schalter, der der ersten Schalterkennung entspricht; und Empfangen eines von dem ersten Schalter zurückgesendeten Pakets,
wobei das zurückgegebene Paket dem Paket entspricht, in das ein Kennungspaar eingekapselt wurde, und
wobei das Kennungspaar aus der ersten Schalterkennung und einer Endgerätekennung besteht;
wobei die Verarbeitungseinheit ferner zu Folgendem konfiguriert ist: Bestimmen, dass das von dem ersten Schalter zurückgegebene Paket das Kennungspaar umfasst; und
Suchen einer zuvor erlernten zweiten Zuordnungsbeziehung zwischen Pfadinformationen und dem Kennungspaar für zweite Pfadinformationen, die der Zielendgerätekennung entsprechen; und
wobei die Transceivereinheit ferner konfiguriert ist, das von dem Quellenendgerät gesendete Paket basierend auf den zweiten Pfadinformationen an das Zielendgerät weiterzuleiten.

12. Paketübertragungsschalter, umfassend:
eine Verarbeitungseinheit (1010), die zu Folgendem konfiguriert ist: Parsen eines Pakets von einem Verteiler, um erste Adressinformationen und zweite Adressinformationen eines Zielendgeräts zu bestimmen, welches das Paket empfangen muss; nachdem bestimmt wurde, dass die zweiten Adressinformationen des Zielendgeräts sich in einem Teilnetzsegment der zweiten Adressinformationen befinden, das von einem ersten Schalter verwaltet wird, Suchen, basierend auf den ersten Adressinformationen des Zielendgeräts, nach einer vorgespeicherten Zuordnungsbeziehung zwischen ersten Adressinformationen und einem Kennungspaar, das aus einer ersten Schalterkennung und einer Endgerätekennung besteht, für ein Kennungspaar, in dem sich eine Zielendgerätekennung befindet; und
Einkapseln des gefundenen Kennungspaars in dem Paket; und
eine Transceivereinheit (1000), die konfiguriert ist, das Paket an den Verteiler zu senden.

## Revendications

1. Procédé de transmission de paquets, comprenant :
la réception (300), par un distributeur, d'un paquet envoyé par un terminal source, le paquet comprenant des informations de destination d'un terminal de destination pour le paquet ;
la détermination (301) d'informations de chemin du paquet provenant du terminal source au distributeur, et la recherche d'une première relation de mise en correspondance pré-apprise entre des informations de chemin et un identifiant de commutateur pour un premier identifiant de commutateur qui correspond aux informations de chemin déterminées ;
l'envoi (302), par le distributeur, du paquet à un premier commutateur correspondant au premier identifiant de commutateur ;
la réception (305), par le distributeur, d'un paquet renvoyé par le premier commutateur,
le paquet renvoyé correspondant au paquet dans lequel une paire d'identifiants a été encapsulée, et
la paire d'identifiants étant composée du premier identifiant de commutateur et d'un identifiant de terminal ;
la détermination (306) que le paquet renvoyé par le premier commutateur comprend la paire d'identifiants,
l'identifiant de terminal dans la paire d'identifiants correspondant à un identifiant de terminal de destination ;
la recherche (307), par le distributeur, d'une seconde relation de mise en correspondance pré-apprise entre des informations de chemin et la paire d'identifiants pour des secondes informations de chemin correspondant à l'identifiant de terminal de destination ; et
l'acheminement (308), par le distributeur au terminal de destination sur la base des secondes informations de chemin, du paquet envoyé par le terminal source.

2. Procédé selon la revendication 1, avant l'acheminement, par le distributeur au terminal de destination, du paquet envoyé par le terminal source, comprenant en outre :
la détermination, par le distributeur, que le paquet renvoyé comprend un deuxième identifiant de commutateur mais ne comprend pas l'identifiant de terminal de destination ;
l'envoi, par le distributeur, du paquet renvoyé à un deuxième commutateur correspondant au deuxième identifiant de commutateur ;
la réception, par le distributeur, d'un paquet renvoyé par le second commutateur, le paquet renvoyé par le second commutateur comprenant le second identifiant de commutateur et l'identifiant de terminal de destination ; et
la recherche, par le distributeur, de la deuxième relation de mise en correspondance entre des informations de chemin et une paire d'identifiants pour des troisièmes informations de chemin correspondant à une paire d'identifiants composée du deuxième identifiant de commutateur et de l'identifiant de terminal de destination.

3. Procédé selon la revendication 1 ou 2, avant l'envoi, par le distributeur, du paquet au premier commutateur, comprenant en outre :
lorsque le distributeur ne trouve pas, sur la base de la première relation de mise en correspondance, l'identifiant de commutateur correspondant aux informations de chemin du paquet provenant du terminal source au distributeur, l'envoi, par le distributeur, d'une demande d'authentification de terminal à un serveur d'authentification, la demande d'authentification de terminal comprenant des informations d'attribut du terminal source, et le serveur d'authentification pré-stockant une correspondance entre des informations d'attribut d'un terminal et un identifiant de commutateur ; et
la réception, par le distributeur, du premier identifiant de commutateur qui est trouvé par le serveur d'authentification et qui correspond aux informations d'attribut du terminal source.

4. Procédé selon la revendication 3, comprenant en outre :
l'attribution, par le distributeur, d'un identifiant de terminal au terminal source ; et
le stockage, par le distributeur, de la deuxième relation de mise en correspondance entre les informations de chemin du paquet provenant du terminal source au distributeur et une paire d'identifiants composée du premier identifiant de commutateur et de l'identifiant de terminal attribué.

5. Procédé selon l'une quelconque des revendications 1 à 4, avant l'envoi, par le distributeur, du paquet au premier commutateur, comprenant en outre :
la recherche, par le distributeur, de la deuxième relation de mise en correspondance pour un identifiant de terminal source et le premier identifiant de commutateur sur la base des informations de chemin du paquet provenant du terminal source au distributeur, une paire d'identifiants composée de l'identifiant de terminal source et du premier identifiant de commutateur correspondant aux informations de chemin du paquet provenant du terminal source au distributeur ; et
l'encapsulation, par le distributeur, de l'identifiant de terminal source et du premier identifiant de commutateur dans le paquet.

6. Procédé selon l'une quelconque des revendications 1 à 5, la détermination, par le distributeur, d'informations de chemin du paquet provenant du terminal source au distributeur comprenant :
l'analyse, par le distributeur, du paquet, pour obtenir des premières informations de chemin encapsulées dans le paquet, les premières informations de chemin étant un numéro de port du distributeur utilisé, pour se connecter à un dispositif en aval, un ou plusieurs dispositifs en aval étant situés sur un chemin entre le terminal source et le distributeur ; et
la détermination, par le distributeur, du numéro de port du distributeur utilisé pour se connecter au dispositif en aval dans les premières informations de chemin, et la détermination des informations de chemin du paquet provenant du terminal source au distributeur sur la base du numéro de port déterminé du distributeur.

7. Procédé de transmission de paquets, comprenant :
l'analyse (403), par un premier commutateur, d'un paquet provenant d'un distributeur, pour déterminer des premières informations d'adresse et des secondes informations d'adresse d'un terminal de destination qui doit recevoir le paquet ;
après avoir déterminé que les secondes informations d'adresse du terminal de destination sont dans un segment de sous-réseau de secondes informations d'adresse gérées par le premier commutateur, la recherche (404), par le premier commutateur sur la base des premières informations d'adresse du terminal de destination, d'une relation de mise en correspondance pré-stockée entre les premières informations d'adresse et une paire d'identifiants composée d'un premier identifiant de commutateur et d'un identifiant de terminal pour une paire d'identifiants dans laquelle un identifiant de terminal de destination est situé ; et
l'encapsulation (405), par le premier commutateur, de la paire d'identifiants trouvée dans le paquet, et l'envoi du paquet au distributeur.

8. Procédé selon la revendication 7, comprenant en outre :
lorsque le premier commutateur détermine que les secondes informations d'adresse du terminal de destination ne sont pas dans le segment de sous-réseau des secondes informations d'adresse gérées par le premier commutateur, la détermination, par le premier commutateur sur la base des secondes informations d'adresse du terminal de destination, d'un segment de sous-réseau dans lequel les secondes informations d'adresse sont situées ;
la recherche, par le premier commutateur, de la relation de mise en correspondance pré-stockée entre un segment de sous-réseau et un identifiant de commutateur pour un second identifiant de commutateur sur la base du segment de sous-réseau déterminé,
le second identifiant de commutateur correspondant au segment de sous-réseau déterminé ; et
l'encapsulation, par le premier commutateur, du deuxième identifiant de commutateur dans le paquet, et l'envoi du paquet au distributeur.

9. Procédé selon la revendication 7, avant l'encapsulation, par le premier commutateur, de la paire d'identifiants trouvés dans le paquet, comprenant en outre :
lorsque le premier commutateur ne trouve pas la paire d'identifiants dans laquelle l'identifiant de terminal de destination est situé, la diffusion, par le premier commutateur, d'une demande d'obtention de l'identifiant de terminal de destination, la demande d'obtention de l'identifiant de terminal de destination comprenant les secondes informations d'adresse du terminal de destination ; et
la réception, par le premier commutateur, d'un paquet comprenant l'identifiant de terminal de destination, et le stockage d'une relation de mise en correspondance entre les premières informations d'adresse du terminal de destination et une paire d'identifiants composée du premier identifiant de commutateur et de l'identifiant de terminal de destination.

10. Procédé selon l'une quelconque des revendications 7 à 9, comprenant en outre :
l'analyse, par le premier commutateur, du paquet provenant du distributeur, pour déterminer des premières informations d'adresse d'un terminal source qui envoie le paquet ;
lorsque le premier commutateur détermine que la relation de mise en correspondance pré-stockée entre les premières informations d'adresse et une paire d'identifiants composée d'un premier identifiant de commutateur et d'un identifiant de terminal ne comprend pas une relation de mise en correspondance des premières informations d'adresse du terminal source qui envoie le paquet, l'obtention, par le premier commutateur, d'un identifiant de terminal source et du premier identifiant de commutateur qui sont compris dans le paquet ; et
le stockage, par le premier commutateur, d'une relation de mise en correspondance entre les premières informations d'adresse du terminal source qui envoie le paquet et une paire d'identifiants composée de l'identifiant de terminal source et du premier identifiant de commutateur.

11. Distributeur de transmission de paquets, comprenant :
une unité d'émission-réception (800), configurée pour recevoir un paquet envoyé par un terminal source, le paquet comprenant des informations de destination d'un terminal de destination pour le paquet ; et
une unité de traitement (810), configurée pour : déterminer des informations de chemin du paquet provenant du terminal source au distributeur, et rechercher une première relation de mise en correspondance pré-apprise entre des informations de chemin et un identifiant de commutateur pour un premier identifiant de commutateur qui correspond aux informations de chemin déterminées ;
l'unité émettrice-réceptrice étant en outre configurée pour : envoyer le paquet à un premier commutateur correspondant au premier identifiant de commutateur, et recevoir un paquet renvoyé par le premier commutateur,
le paquet renvoyé correspondant au paquet dans lequel une paire d'identifiants a été encapsulée, et
la paire d'identifiants étant composée du premier identifiant de commutateur et d'un identifiant de terminal ;
l'unité de traitement étant en outre configurée pour : déterminer que le paquet renvoyé par le premier commutateur comprend la paire d'identifiants ; et rechercher une seconde relation de mise en correspondance pré-apprise entre des informations de chemin et la paire d'identifiants pour des secondes informations de chemin correspondant à l'identifiant de terminal de destination ; et
l'unité émettrice-réceptrice étant en outre configurée pour acheminer, au terminal de destination sur la base des secondes informations de chemin, le paquet envoyé par le terminal source.

12. Commutateur de transmission de paquets, comprenant :
une unité de traitement (1010), configurée pour : analyser un paquet provenant d'un distributeur, pour déterminer des premières informations d'adresse et des secondes informations d'adresse d'un terminal de destination qui doit recevoir le paquet ; après qu'il est déterminé que les secondes informations d'adresse du terminal de destination sont dans un segment de sous-réseau de secondes informations d'adresse gérées par un premier commutateur, rechercher, sur la base des premières informations d'adresse du terminal de destination, une relation de mise en correspondance pré-stockée entre les premières informations d'adresse et une paire d'identifiants composée d'un premier identifiant de commutateur et d'un identifiant de terminal pour une paire d'identifiants dans laquelle un identifiant de terminal de destination est situé ; et encapsuler la paire d'identifiants trouvée dans le paquet ; et
une unité émettrice-réceptrice (1000), configurée pour envoyer le paquet au distributeur.
